(19) Europäisches Patentamt
European Patent Office
Office européen des brevets

(11) **EP 2 847 999 B1**

(12) **EUROPÄISCHE PATENTSCHRIFT**

(45) Veröffentlichungstag und Bekanntmachung des Hinweises auf die Patenterteilung:
**22.12.2021   Patentblatt 2021/51**

(21) Anmeldenummer: **13720974.8**

(22) Anmeldetag: **08.05.2013**

(51) Int Cl.:
*H04N 9/31* (2006.01)      *G03B 21/14* (2006.01)
*G01B 11/25* (2006.01)

(86) Internationale Anmeldenummer:
**PCT/EP2013/059674**

(87) Internationale Veröffentlichungsnummer:
**WO 2013/167705 (14.11.2013 Gazette 2013/46)**

(54) **BILDPROJEKTION MIT MEHRKANALOPTIK MIT NICHT KREISFÖRMIGER GESAMTAPERTUR**

IMAGE PROJECTION WITH MULTI-CHANNEL OPTICS HAVING NON-CIRCULAR OVERALL APERTURE

PROJECTION D'IMAGES AVEC OPTIQUE MULTI-CANAL À OUVERTURE TOTALE NON CIRCULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2012   DE 102012207621**

(43) Veröffentlichungstag der Anmeldung:
**18.03.2015   Patentblatt 2015/12**

(73) Patentinhaber: **Fraunhofer Gesellschaft zur Förderung der angewandten Forschung e.V.
80686 München (DE)**

(72) Erfinder:
• **SCHREIBER, Peter
07749 Jena (DE)**
• **SIELER, Marcel
07745 Jena (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
**WO-A1-97/22032     DE-A1-102009 024 894**

• **MAX GROSSE ET AL: "Coded aperture projection", ACM TRANSACTIONS ON GRAPHICS, Bd. 29, Nr. 3, 1. Juni 2010 (2010-06-01), Seiten 1-12, XP055073898, ISSN: 0730-0301, DOI: 10.1145/1805964.1805966**
• **None**

EP 2 847 999 B1

## Beschreibung

Ausführungsbeispiele der vorliegenden Erfindung beziehen sich auf ein Projektionsdisplay. Weitere Ausführungsbeispiele der vorliegenden Erfindung beziehen sich auf ein Verfahren zum Anzeigen eines Gesamtbildes. Weitere Ausführungsbeispiele beziehen sich auf ein Computerprogramm zur Ausführung des Verfahrens zum Anzeigen eines Gesamtbildes. Weitere Ausführungsbeispiele der vorliegenden Erfindung beziehen sich auf eine Anordnung zur Manipulation der Abbildungseigenschaften eines Projektionsapparates für unterschiedliche Projektionsabstände. Weitere Ausführungsbeispiele der vorliegenden Erfindung beziehen sich auf ein Projektionsdisplay mit nicht kreisförmiger und/oder länglicher Gesamtapertur.

Ein Projektionsdisplay oder Projektionssystem kann dazu verwendet werden, ein Bild oder Muster auf eine Projektionsfläche wie z.B. eine Leinwand oder ein Objekt zu projizieren. Das Bild oder Muster kann dabei zumindest für eine längere Zeitspanne im Wesentlichen statisch sein, wie man es von einem Diaprojektor kennt. Eine andere Art eines Projektionsdisplays ist als Videoprojektor oder Digitalprojektor bekannt und in der Lage, auch dynamische Bilder bzw. Bildsequenzen zu projizieren. Projektionsdisplay bzw. Projektionssysteme kommen auch bei 3D-Vermessungssystemen zum Einsatz, die auf dem Prinzip der Streifenprojektion (englisch: "fringe projection") oder allgemein auf der Projektion eines oder mehrerer bekannter Muster auf ein zu vermessendes Objekt beruhen.

Damit das Bild oder Muster scharf auf die Projektionsfläche projiziert werden kann, sollte sich die Projektionsfläche möglichst in einem Abstand von dem Projektionsdisplay bzw. -system befinden, auf den die Projektionsoptik des Projektionsdisplays fokussiert ist, oder sich zumindest in einem Toleranzbereich um diesen Abstand befinden. Dieser Toleranzbereich wird auch als schirmseitige Schärfentiefe des Projektors bzw. Projektionsdisplays bezeichnet. Bei vielen Projektionsdisplays kann die Brennweite der Projektionsoptik manuell oder automatisch auf den vorliegenden oder gewünschten Abstand zwischen Projektionsdisplay und Projektionsfläche eingestellt werden. Es kann allerdings vorkommen, dass die Projektionsfläche schräg zu einer von der Projektionsoptik vorgegebenen Projektionsrichtung ist, wodurch sich der Abstand zwischen Projektionsdisplay und Projektionsfläche innerhalb des Bildes stark ändern kann. Zum Beispiel kann eine untere Kante des projizierten Bildes sich in einem sehr viel kürzeren Abstand zum Projektionsdisplay befinden, als eine obere Kante desselben projizierten Bildes. Auch bei einer gewölbten, diskontinuierlichen oder gestuften Projektionsfläche kann es zu einer großen Abstandsvariation innerhalb des projizierten Bilds kommen. Unter Umständen kann diese Abstandsvariation größer sein als die schirmseitige Schärfentiefe, die das Projektionsdisplay erzielen kann. In diesem Fall muss auch bei optimaler Fokussierung der Projektionsoptik damit gerechnet werden, dass einzelne Bereiche des projizierten Bildes unscharf erscheinen.

Eine größere Schärfentiefe kann typischerweise durch eine höhere Blendenzahl erreicht werden. Durch eine höhere Blendenzahl wird jedoch auch die effektive Fläche, die für einen Lichtdurchtritt zur Verfügung steht, reduziert. Somit geht eine erhöhte Blendenzahl typischerweise mit einer geringeren Lichtstärke einher, was typischerweise andere Probleme hervorruft, insbesondere in der Bereitstellung einer ausreichend starken Lichtquelle für das Projektionsdisplay.

Im Hinblick auf eine angestrebte Miniaturisierung von Projektionsdisplays mit ausreichender Lichtstärke wurde die Verwendung von Mehrkanaloptiken vorgeschlagen. In der DE 102009024894 wird ein Projektionsdisplay mit einer Lichtquelle und regelmäßig angeordneten optischen Kanälen beschrieben. Durch einen leicht verringerten Mittenabstand der Projektionslinsen gegenüber den bildgebenden Strukturen entsteht ein vom Arrayzentrum nach außen wachsender Versatz der jeweils bildgebenden Struktur und der entsprechenden Projektionsoptik, so dass eine Superposition der reellen Einzelabbildungen in einer endlichen Entfernung entsteht. Aufgrund der Aufteilung in mehrere Kanäle ist es möglich, den Abstand zwischen bildgebender Struktur und Projektionsoptik zu verringern, d.h. die Aufbauhöhe, so dass eine Miniaturisierung gleichzeitig mit anderen Vorteilen erhalten wird. Bei dem in der DE 10 2009 024 894 beschriebenen Projektionsdisplay ergibt sich durch die regelmäßig angeordneten optischen Kanäle jedoch eine symmetrisch ausgeführte Gesamtapertur, weswegen der Schärfentiefebereich entsprechend symmetrisch ausgeführt ist.

Je nach Anwendungsbereich des Projektionsdisplays ist bereits ein Vorwissen über das/die zu projizierende(n) Bild(er) bzw. zumindest ein darin enthaltenes Bildmerkmal vorhanden. Im Falle der Streifenprojektion zur 3D-Vermessung von Objekten ist zum Beispiel die Orientierung bzw. Ausrichtung der Streifenmuster bekannt. Daraus ergeben sich unterschiedliche Anforderungen an die von dem Projektionsdisplay zu erzielende Schärfentiefe für eine erste Richtung, die zum Beispiel im Wesentlichen parallel zu den Streifen des Streifenmusters verläuft, und eine zweite Richtung, die zum Beispiel im Wesentlichen orthogonal dazu verläuft.

In "Coded aperture projection" (ACM Transactions on graphics, Bd.29, Nr. 3, 1. Juni 2010, Seiten 1-12) wird die Integration kodierter Aperturen in Projektoren beschrieben, um die Tiefenschärfe zu verbessern.

In WO 97/22032 A1 ist ein Beleuchtungssystem zum Beleuchten eines Ausgabefeldes beschriebe, das eine erste Anordnung zum Empfangen von Licht aufweist, die erste Linsen enthält.

Die Aufgabe der vorliegenden Erfindung besteht darin, ein Projektionsdisplay und ein Verfahren zum Anzeigen eines Gesamtbildes zu schaffen, bei dem eine möglichst hohe Projektionshelligkeit mit einer richtungsabhängigen Schärfentiefe kombiniert wird, die in ihrer Orientierung zumindest einem Bildmerkmal des zu projizierenden Bildes bzw. Musters entspricht.

Diese Aufgabe wird durch ein Projektionsdisplay gemäß Anspruch 1 oder Anspruch 18, ein Verfahren zum Anzeigen eines Gesamtbildes gemäß Anspruch 14 oder Anspruch 25 oder ein Computerprogramm gemäß Anspruch 17 oder 26 gelöst.

Ausführungsbeispiele der vorliegenden Erfindung schaffen ein Projektionsdisplay mit einem Bildgeber und einer Mehrkanaloptik. Der Bildgeber ist ausgebildet, um in einer Verteilung von Teilbereichen einer Bildgebungsebene des Bildgebers Einzelbilder zu erzeugen. Die Mehrkanaloptik umfasst Kanäle, die konfiguriert sind, um pro Kanal jeweils einen zugeordneten Teilbereich des Bildgebers abzubilden, und zwar so, dass sich die Abbildungen der Einzelbilder in einer Projektionsfläche zu einem Gesamtbild zusammenfügen. Diese Kanäle der Mehrkanaloptik sind in einer länglichen Anordnung angeordnet, die im Wesentlichen wie zumindest ein längliches Bildmerkmal des Gesamtbilds ausgerichtet ist. Auf diese Weise weist die Mehrkanaloptik ein zweidimensionales anisotropes Unschärfeverhalten eines jeden projizierten Bildpunkts auf.

Ausführungsbeispiele basieren darauf, dass es mit einem gewissen (Vor-)wissen über das zu projizierende Bild bzw. Muster (und geeigneter Struktur des Bildes selber) möglich ist, die Forderungen nach hoher Bildhelligkeit und ausreichender Schärfentiefe miteinander zu vereinigen. So kann das Vorwissen über das zu projizierende Bild dazu genutzt werden, Richtungen und/oder Bereiche innerhalb des Bildes zu identifizieren, in denen sich das Bild nur geringfügig oder gar nicht ändert. Entlang dieser Richtung(en) muss nur eine relativ niedrige Schärfentiefe erzielt werden, zumindest dann, wenn es akzeptabel ist, dass insbesondere am Rand des projizierten Gesamtbilds Unschärfeeffekte auftreten dürfen. Bei einem für die 3D-Vermessung genutzten Streifenmuster definieren beispielsweise die Streifen eine derartige Richtung, das heißt parallel zu den Streifen reicht typischerweise eine relativ geringe Schärfentiefe aus, da sich der Bildinhalt entlang dieser Richtung ohnehin nicht oder nur geringfügig ändert. Im Gegenzug kann diese Richtung innerhalb des Gesamtbilds ausgenutzt werden, um eine größere Lichtdurchtrittsfläche zur Verfügung zu stellen, was einer höheren Projektionshelligkeit dient. Anders ausgedrückt kann eine Gesamtapertur der Mehrkanaloptik anisotrop innerhalb einer Ebene sein, die orthogonal zu einer Projektionsrichtung ist - die Mehrkanaloptik kann somit in einer Richtung entlang des zumindest einen Bildmerkmals eine größere Gesamtapertur aufweisen, als orthogonal dazu. Eine Anisotropie der Gesamtapertur bzw. des Unschärfeverhaltens der Mehrkanaloptik kann sich insbesondere in der Veränderung der Abbildung und/oder der Form eines "Unschärfeflecks" (engl. "blur") gemäß der Subapertur-Anordnung zeigen: Mit zunehmender Differenz der Projektionsdistanz von der idealen Projektionsdistanz nimmt der Unschärfefleck zunehmend die Form der Subapertur-Anordnung an. Die Anisotropie des Unschärfeverhaltens kann wie eine Richtungsabhängigkeit verstanden werden für Richtungen, die in einer Ebene verlaufen, die orthogonal zu der Projektionsrichtung und/oder der optischen Achse der Mehrkanaloptik ist. Gemäß Ausführungsbeispielen ist diese Anisotropie der Gesamtapertur der Mehrkanaloptik entsprechend einer eventuellen Anisotropie des Bildinhalts ausgerichtet, so dass eine in einer Richtung niedrigere Gesamtapertur keine (sichtbare und/oder störende) Auswirkung auf eine scharfe Darstellung des zu projizierenden Bildes hat. Dies gilt selbst dann, wenn der Projektionsabstand innerhalb des zu projizierenden Bildes stark variiert, zum Beispiel auf Grund einer bezüglich der Projektionsrichtung geneigten oder einer gewölbten Projektionsfläche. Da die einzelnen Kanäle der Mehranaloptik jeweils eine relativ kleine Einzelapertur (entsprechend einer hohen schirmseitigen Blendenzahl) aufweisen, wird jedes einzelne Bild für sich auch mit einer entsprechend großen Schärfentiefe abgebildet, so dass Bildinhalte, die sich schräg oder orthogonal zu der oben erwähnten Anisotropierichtung (zum Beispiel die Richtung parallel zu den Streifen eines Streifenmusters) des Bildes verändern, innerhalb eines jeden einzelnen Bildes mit einem großen Schärfentiefebereich projiziert werden. Ein großer Schärfentiefebereich kann mit einer relativ hohen Projektionshelligkeit kombiniert werden, ohne Einbußen bei der scharfen Darstellung von wesentlichen oder wichtigen Bildmerkmalen hinnehmen zu müssen.

Der Bildinhalt des zu projizierenden Bildes kann das zumindest eine längliche Bildmerkmal des Gesamtbildes enthalten. Ein derartiges Bildmerkmal kann zum Beispiel eine Hell-Dunkel-Kante, ein Helligkeitsverlauf, ein Graustufenverlauf, ein Farbverlauf, etc. sein. Eine Längsrichtung des Bildmerkmals kann dadurch definiert sein, dass die Bildwerte (z.B. Graustufenwerte) in dieser Richtung nur wenig variieren. Zum Beispiel kann die Längsrichtung des Bildmerkmals diejenige Richtung sein, in der ein Integral des Gradienten über die Erstreckung des Bildmerkmals minimal ist. Das längliche Bildmerkmal muss nicht unbedingt geradlinig sein, sondern kann auch einen gekrümmten Verlauf haben. Die längliche Anordnung der Mehrkanaloptik (oder Teilen davon) kann einen derartigen gekrümmten Verlauf entweder ebenfalls als gekrümmte Anordnung mehrerer Kanäle nachbilden oder mittels einer geradlinigen Kanalanordnung annähern.

Die Mehrkanaloptik kann in einer ersten Richtungen eine erste Gesamtapertur und in einer zweiten Richtung eine zweite Gesamtapertur aufweisen, die unterschiedlich von der ersten Gesamtapertur ist. Die zweite Richtung ist unterschiedlich von der ersten Richtung, das heißt die zweite Richtung ist schräg oder orthogonal zu der ersten Richtung.

Die Kanäle der Mehrkanaloptik können eine zweidimensionale Anordnung bilden, die in Längsrichtung mehr Kanäle aufweist als in Querrichtung. Die Längsrichtung entspricht dabei typischerweise der Längsrichtung des länglichen Bildmerkmals bzw. einer Richtung, die um höchstens ±20 Grad, bevorzugt um höchstens ±10 Grad und weiter bevorzugt um höchstens ±20 Grad von dieser Richtung abweicht. Auf diese Weise kann insbesondere erreicht werden, dass die Mehrkanaloptik in der Längsrichtung die oben erwähnte größere künstliche Apertur in der Richtung entlang des zumindest einen Bildmerkmals aufweist.

Die längliche Anordnung der Kanäle der Mehrkanaloptik, kann einen Winkel zwischen 80 und 100 Grad mit einer überwiegenden Intensitätsgradientenrichtung des Gesamtbildes einschließen. Die überwiegende Intensitätsgradientenrichtung kann zum Beispiel anhand einer Analyse des Gesamtbildes ermittelt werden. Denkbar ist zum Beispiel, dass an mehreren Stellen des Gesamtbilds der Intensitätsgradient bestimmt wird und die Ergebnisse gemittelt werden. Die Richtung des gemittelten Intensitätsgradienten sei dann die überwiegende Intensitätsgradientenrichtung. Der Intensitätsgradient kann sich auch auf einen Teilbereich des Gesamtbildes beziehen (zum Beispiel im Sinne eines in diesem Teilbereich vorkommenden maximalen Gradienten), der den Kanälen der Mehrzahloptik zugeordnet ist. Der Intensitätsgradient kann sich auf Helligkeitswerte, Graustufen, Farbintensitäten oder sonstige Größen beziehen, die in der Bildverarbeitung üblich sind.

Gemäß alternativen Ausführungsbeispielen können die erwähnten Kanäle der Mehrkanaloptik spaltenweise angeordnet sein. Dabei kann eine Anzahl der Spalten kleiner sein als eine maximal vorkommende Anzahl von Kanälen innerhalb einer Spalte.

Der Bildgeber kann ein statischer Bildgeber sein und das Gesamtbild kann vorbestimmt sein, d.h. das Gesamtbild kann bereits vorher bekannt sein, was zum Beispiel insbesondere bei Anwendungen zur 3D-Vermessung mittels Streifenmuster vorkommen kann. Als statischer Bildgeber kann zum Beispiel ein passiver Bildgeber, wie z. B. eine Schattenmaske, verwendet werden. Bei alternativen Ausführungsformen kann ein dynamischer Bildgeber bzw. aktiver Bildgeber, wie z. B. ein digitaler Bildgeber verwendet werden. Um auch bei einem dynamischen Bildgeber die Möglichkeiten ausnutzen zu können, die sich aus der anisotropen Gesamtapertur der Mehrkanaloptik hinsichtlich Projektionshelligkeit und auf den Bildinhalt abgestimmter Schärfentiefe ergeben, kann vorgesehen sein, dass eine Vorzugrichtung des zumindest einen Bildmerkmals des Gesamtbilds vorbekannt ist oder während des Betriebs (vor der Projektion) bestimmt wird. Bei manchen Ausführungsbeispielen kann es ausreichen, wenn die Richtung zumindest innerhalb eines Toleranzbereichs (z.B. +/- 5 Grad bis 20 Grad) vorbekannt ist bzw. bestimmt werden kann. Mit der Kenntnis der Vorzugsrichtung (z.B. die überwiegende Kantenrichtung) können gezielt Anordnungen von Teilbereichen des Bildgebers (und gegebenenfalls Lichtquellen, die diesen Teilbereichen zugeordnet sind) ausgewählt und verwendet werden, die dieser Richtung möglichst ähnlich sind. Die Mehrkanaloptik kann in diesem Fall zum Beispiel auch eine quadratische, kreisförmige oder hexagonale Anordnung von Einzelkanälen aufweisen, die in zumindest zwei Richtungen im Wesentlichen dieselbe Gesamtapertur hat. Innerhalb der Mehrkanaloptik können nun mittels einer entsprechenden Aktivierung entsprechender Teilbereiche des Bildgebers und gegebenenfalls zugeordneter Lichtquellen während des Betriebs des Projektionsdisplays Anordnungen von zumindest einigen Kanälen der Mehrkanaloptik aktiviert werden, die in der erwähnten zumindest einen länglichen Anordnung angeordnet sind, die dem zumindest einen Bildmerkmal des Gesamtbilds ähnlich ist. Zwei Beispiele sollen dies verdeutlichen: Ein erstes zu projizierendes Bild weist eine im Wesentlichen senkrechte Vorzugsrichtung auf, z. B. innerhalb eines senkrechten Streifenmusters. Nach Feststellung der Vorzugrichtung werden nun Teilbereiche des Bildgebers und/oder gegebenenfalls zugeordnete Lichtquellen aktiviert, die gemeinsam eine im Wesentlichen senkrechte Anordnung ergeben (wobei die Richtungsangabe "senkrecht" sich auf die Wahrnehmung eines Betrachters des projizierten Gesamtbildes bezieht). Ein zweites zu projizierendes Bild weist dagegen eine im Wesentlichen waagerechte Richtung auf, zum Beispiel in Form eines waagerechten Streifenmusters. Nach Feststellung dieser waagerechten Vorzugsrichtung können nun andere Teilbereiche des Bildgebers und/oder gegebenenfalls zugeordnete Lichtquellen aktiviert werden, die gemeinsam eine im Wesentlichen waagerechte Anordnung ergeben. Gemäß einigen Ausführungsbeispielen können der Bildgeber und die Mehrkanaloptik zum Beispiel im Wesentlichen kreuzförmige oder T-förmige Anordnungen von Teilbereichen bzw. Kanälen aufweisen, wobei bei einer im Wesentlichen senkrechten Vorzugsrichtung die Teilbereiche bzw. Kanäle in dem senkrechten Balken des Kreuzes verwendet werden, und bei einer im Wesentlichen waagerechten Vorzugsrichtung die Teilbereiche bzw. Kanäle in dem waagerechten Balken verwendet werden. Zwar bleibt dabei jeweils ein Teil der Teilbereiche des Bildgebers bzw. der Kanäle der Mehrkanaloptik ungenutzt und kann nicht zur Bildhelligkeit beitragen; die Bildhelligkeit ist jedoch höher als bei Verwendung von nur einem Teilbereich/Kanal und gleichzeitig ist die Schärfentiefe zumindest in der Richtung, in der eine möglichst große Schärfentiefe benötigt wird, höher als bei Verwendung sämtlicher Teilbereiche/Kanäle.

Wie erwähnt kann der Bildgeber eine Verteilung von Teilbereichen aufweisen, mit denen jeweilige Einzelbilder erzeugt werden können. Da jeder Kanal der Mehrkanaloptik typischerweise einem der Teilbereiche des Bildgebers zugeordnet ist, können auch die Teilbereiche des Bildgebers in einer länglichen Anordnung angeordnet sein, die dem zumindest einen länglichen Bildmerkmal des Gesamtbilds ähnlich ist. Auf diese Weise kann der Bildgeber ebenfalls eine Art richtungsabhängige künstliche Apertur (Gesamtapertur) aufweisen, in ähnlicher Weise wie die Mehrkanaloptik.

Bei manchen Ausführungsbeispielen kann die Mehrkanaloptik eine eindimensionale Anordnung von Projektionsoptiken in einer zu der Bildgebungsebene im Wesentlichen parallelen Projektionsebene aufweisen. Die Projektionsoptikanordnung kann konfiguriert sein, um jeweils ein zugeordnetes Einzelbild des Bildgebers entlang einer jeweiligen optischen Achse in Richtung der Projektionsfläche abzubilden, und zwar so, dass sich die Abbildung der Einzelbilder in der Projektionsfläche zu dem Gesamtbild überlagern. Diese Überlagerung der Abbildungen der Einzelbilder ist somit ein Spezialfall des Zusammenfügens der Abbildungen der Einzelbilder zu dem Gesamtbild. Bei alternativen Ausführungsbeispielen sind auch Mischformen denkbar, so dass es zu einer teilweisen Überlagerung der Abbildungen der Einzelbilder kommt, d.h. einer Überlappung der Abbildungen der Einzelbilder.

Die Kanäle der Mehrkanaloptik können eine zweidimensionale Anordnung bilden, die einen oder mehrere Bereiche mit entsprechenden Einhüllenden der Kanäle aufweisen, wobei der Bereich oder die Bereiche dem zumindest einen Bildmerkmal ähneln. Der Bereich oder die Bereiche können zusammenhängende Bereiche sein. Alternativ kann es vorgesehen sein, dass zwei oder mehr Bereiche alternierend angeordnet sind.

Die Kanäle der Mehrkanaloptik können eine im Vergleich zu der Gesamtapertur der gesamten Mehrkanaloptik kleine Subapertur und eine hohe Schärfentiefe aufweisen, so dass die Abbildung der Einzelbilder einzeln betrachtet über einen vergleichsweise großen (im Vergleich zur Projektion des Gesamtbilds) Bereich eines Abstands zwischen der Mehrkanaloptik und der Projektionsfläche scharf sind. Die Kanäle der Mehrkanaloptik können ein hyperfokales Verhalten haben.

Zumindest einige der Kanäle der Mehrkanaloptik können in einer symbolähnlichen Subapertur-Anordnung angeordnet sein, um für variierende Projektionsabstände ein symbolhaftes Unschärfeverhalten zu erzielen, das der symbolähnlichen Subapertur-Anordnung entspricht. Mit zunehmender Abweichung der Projektionsdistanz von der idealen Projektionsdistanz nimmt das Unschärfeverhalten der Mehrkanaloptik nämlich zu, so dass das Gesamtbild nur noch unscharf überlagert wird, die Abbildungen der Einzelbilder jedoch mehr und mehr ein Symbol auf der Projektionsfläche ergeben, das der symbolähnlichen Subapertur-Anordnung entspricht. Zum Beispiel können die Teilbereiche des Bildgebers konfiguriert sein, ein Wort oder einen Schriftzug zu projizieren. Die Subapertur-Anordnung kann symbolartig in Form eines Logos oder grafischen Zeichens gestaltet sein. Wenn sich die Projektionsfläche bei der idealen Projektionsdistanz oder zumindest innerhalb des Schärfentiefebereichs der Mehrkanaloptik befindet, dann wird das Wort bzw. der Schriftzug auf die Projektionsfläche projiziert. Wird die Projektionsfläche nun jedoch näher auf das Projektionsdisplay zubewegt, dann verschwimmt das Wort/der Schriftzug in Form des Logos/grafischen Zeichens. Wird die Projektionsfläche ausgehend von der idealen Projektionsdistanz oder dem Schärfentiefebereich weiter von dem Projektionsdisplay weg bewegt, dann verschwimmt das Wort/der Schriftzug ebenfalls und es ergibt sich ein Punktmuster auf der Projektionsfläche, das der Gestalt der symbolartigen Subapertur-Anordnung entspricht.

Die Merkmaloptik kann eine eindimensionale Kanalanordnung, eine konzentrische Kanalanordnung, eine quadratische Kanalanordnung, eine hexagonale Kanalanordnung oder eine stochastische Kanalanordnung aufweisen.

Innerhalb der Mehrkanaloptik kann jeder der Kanäle eine Projektionsoptik aufweisen, die zum Beispiel eine Feldlinse und eine Projektionslinse umfasst. Die Feldlinse ist zum Beispiel zwischen einer Lichtquelle und dem Bildgeber angeordnet. Die Projektionslinse ist zum Beispiel zwischen dem Bildgeber und der Projektionsfläche angeordnet. Mit anderen Worten umfasst jeder Kanal eine in einer Durchleuchtungsrichtung vor dem jeweiligen Teilbereich des Bildgebers liegende Feldlinse und einer in der Durchleuchtungsrichtung hinter dem jeweiligen Teilbereich liegende Projektionslinse. Die Projektionsoptiken der Mehrkanaloptik des Projektionsdisplays können eine Dezentrierung bezüglich der zugeordneten Teilbereiche des Bildgebers aufweisen, so dass das sich in der Projektionsfläche überlagernde Gesamtbild reell oder virtuell ist. Durch die Dezentrierung bzw. zentrale Stauchung oder Streckung zwischen den Projektionsoptiken und den zugeordneten Teilbereichen des Bildgebers kann insbesondere eine Projektionsdistanz des Gesamtbilds in der Projektionsfläche eingestellt werden.

Die Mehrkanaloptik kann ferner eine nachgeschaltete und mit den Projektionsoptiken der einzelnen Kanäle gemeinsam zusammenwirkende Gesamtlinse aufweisen, die ausgebildet ist, um kollimierte Strahlenbündel von den Projektionsoptiken zu refokussieren.

Bei weiteren Ausführungsbeispielen der vorliegenden Erfindung kann die nachgeschaltete Gesamtlinse als Optik mit variabler Brennweite ausgebildet sein, so dass eine mittlere Projektionsdistanz einstellbar ist.

Weitere Ausführungsbeispiele stellen ein Projektionssystem mit einer Mehrkanaloptik bereit, die mehrere optische Kanäle umfasst. Die Mehrkanaloptik weist eine zumindest temporäre anisotrope Gesamtapertur mit einer Hauptaperturachse und einer dazu orthogonalen Nebenaperturachse auf. Das Projektionssystem umfasst ferner eine Mehrzahl von Bildgebern, die jeweils einem der optischen Kanäle zugeordnet sind und konfiguriert sind, jeweils ein Teilbild darzustellen, das mittels des zugeordneten optischen Kanals projiziert wird. Die projizierten Teilbilder kombinieren sich zu einem projizierten Gesamtbild, das eine überwiegende Kantenrichtung aufweist. Die Hauptaperturachse schließt einen kleineren Winkel mit der überwiegenden Kantenrichtung ein, als die Nebenaperturachse.

Die Gesamtapertur der Mehrkanaloptik kann permanent anisotrop sein oder lediglich temporär anisotrop sein. Die temporäre Anisotropie kann zum Beispiel durch Deaktivieren einzelner optischer Kanäle erfolgen, so dass die verbleibenden aktiven optischen Kanäle eine Anordnung aufweisen, die länglich ist. Eine derartige längliche Anordnung hat eine größere Ausdehnung in eine Raumrichtung (üblicherweise als Längsrichtung bezeichnet), als in andere Richtungen (z.B. in eine Richtung, die man üblicherweise als Querrichtung bezeichnen würde). Die Gesamtapertur ist üblicherweise in einer Ebene aufgespannt, die orthogonal zu der/den optischen Achse(n) der Mehrkanaloptik ist. Die zumindest temporäre Anisotropie der Gesamtapertur der Mehrkanaloptik bewirkt ein anisotropes Unschärfeverhalten. Die zumindest temporäre anisotrope Gesamtapertur und das zu projizierende Gesamtbild können für ein verbessertes Schärfeverhalten des Projektionssystems derart aneinander ausgerichtet werden, dass im Idealfall die Hauptaperturachse parallel zu der überwiegenden Kantenrichtung verläuft. Neben dem bereits erwähnten selektiven Deaktivieren und Aktivieren einzelner optischer Kanäle der Mehrkanaloptik bzw. der einzelnen zugeordneten Bildgeber kann das gesamte Projektionssystem (oder auch nur ein Teil davon) auch um die optische Achse gedreht werden. In der Regel wird dann auch eine kompensierende Drehung des Bildinhalts des zu projizierenden Gesamtbilds durchzuführen sein, sofern das Gesamtbild in der normalen Orientierung projiziert werden soll. Bei manchen Ausführungsbeispielen lässt sich die Hauptaperturachse nicht stufenlos drehen, sondern nur in diskreten Schritten. In diesen Fällen kann eine Verbesserung des Schärfeverhaltens des Projektionssystems auch dadurch erzielt werden, dass die Hauptaperturachse einen kleinstmöglichen Winkel (auf jeden Fall kleiner als der Winkel zwischen überwiegender Kantenrichtung und Nebenaperturachse) mit der überwiegenden Kantenrichtung aufweist. Das Prinzip von Hauptachse und Nebenachse ist beispielsweise im Zusammenhang mit der Beschreibung von Ellipsen bekannt.

Die überwiegende Kantenrichtung ergibt sich aus dem darzustellenden Bildinhalt. Insbesondere kann die überwiegende Kantenrichtung vorbekannt sein (z.B. im Falle eines Streifenmusters, wie es für Zwecke der 3D-Vermessung verwendet wird), durch arithmetische Mittelwertbildung über dem gesamten Bildinhalt oder eine Bildausschnitt bestimmt werden, durch geometrische Mittelwertbildung, durch Auswertung eines Gradientenhistogramms, oder durch andere statische Auswertungen bestimmt werden. Der Bildinhalt übermittelt eine Information, die zur Erzielung eines technischen Effekts ausgewertet und genutzt wird, nämlich insbesondere das (subjektive) Schärfeverhalten des Projektionssystems zu verbessern bei gleichzeitiger Beibehaltung der gewünschten Beleuchtungsintensität oder dergleichen (oder zumindest ohne gravierende Einbußen bei der Beleuchtungsintensität oder dergleichen hinnehmen zu müssen). Mit anderen Worten schafft es das vorgeschlagene Projektionssystem, die von einem Betrachter des projizierten Gesamtbilds wahrgenommene Unschärfe derart umzuformen, dass sie im Kontext des dargestellten Bildinhalts weniger stark wahrgenommen wird. Dieser Effekt kann in etwa mit dem Effekt von gehörangepassten Audiokodierung (engl.: "perceptual audio coding") verglichen werden, bei der Anteile eines Audiosignals, die vom Menschen ohnehin nicht wahrgenommen werden, weniger oder gar nicht bei der Codierung berücksichtigt werden und somit im Rauschteppich verschwinden. Der Begriff "Kantenrichtung" bzw. "überwiegende Kantenrichtung" ist nicht auf Kanten (z.B. Hell-Dunkel-Kanten oder Farbkanten) beschränkt, sondern kann sich auch auf fließende oder allmähliche Farbübergänge etc. beziehen. Allerdings wird Unschärfe typischerweise am stärksten an abrupten Kanten und Ecken wahrgenommen, so dass eine Gewichtung zugunsten harter Kanten vorgesehen werden kann.

Ausführungsbeispiele der vorliegenden Erfindung werden nachfolgend Bezug nehmend auf die beiliegenden Figuren, in denen gleiche oder gleich wirkende Elemente mit gleichen Bezugszeichen bezeichnet sind, näher erläutert. Es zeigen:

Fig. 1     eine schematische Seitenansicht eines optischen Systems zur Herleitung der Schärfentiefe eines klassischen Einzelapertur-Projektors;

Fig. 2A-2C     verschiedene schematische perspektivische Ansichten eines klassischen Einzelapertur- Projektors mit vergrößerter Abbildung eines Liniengitters;

Fig. 3A-3C     verschiedene schematische perspektivische Ansichten eines klassischen Einzelapertur- Projektors mit angepasster Austrittspupillen zur Erhöhung der Schärfentiefe für Strukturen mit Orientierung parallel zur y-Achse;

Fig. 4     eine schematische perspektivische Ansicht eines Array-Projektors mit regelmäßig angeordneten Projektionskanälen;

Fig. 5A- 5B     verschiedene schematische perspektivische Ansichten eines Array- Projekttors zur Linienprojektion gemäß Ausführungsbeispielen;

Fig. 6A-6C     verschiedene perspektivische Darstellungen eines in Abhängigkeit von der Projektionsdistanz variierenden Unschärfeverhaltens eines Projektionsdisplays, bei dem die Mehrkanaloptik eine symbolähnliche Subapertur-Anordnung aufweist;

Fig. 7     ein schematisches Flussdiagramm eines Verfahrens zum Anzeigen eines Gesamtbilds gemäß Ausführungsbeispielen;

Fig. 8     ein schematisches Blockschaltbild eines Projektionsdisplays, das als Grundlage bzw. Ausgangspunkt für hierin beschriebene Ausführungsbeispiele dienen kann;

Fig. 9     eine schematische Seitenansicht eines Projektionsdisplays, das als Grundlage bzw. Ausgangspunkt für hierin beschriebene Ausführungsbeispiele dienen kann;

Fig. 10    eine schematische Seitenansicht eines Projektionsdisplays, das als Grundlage bzw. Ausgangspunkt für hierin beschriebene Ausführungsbeispiele dienen kann;

Fig. 11    eine Seitenansicht eines Projektionsdisplays, das als Grundlage bzw. Ausgangspunkt für hierin beschriebene Ausführungsbeispiele dienen kann;

Fig. 12    eine schematische Ansicht eines Projektionssystems gemäß weiteren Ausführungsbeispielen;

Fig. 13    eine schematische Ansicht des Projektionssystems von Fig. 12 bei der Projektion eines anderen Bildes, bei dem die überwiegende Kantenrichtung anders ist als in Fig. 12;

Fig. 14    eine schematische Ansicht des Projektionssystems von Fig. 12 bei der Projektion eines weiteren anderen Bildes mit unterschiedlicher Kantenrichtung;

Fig. 15    ein schematisches Blockdiagram eines Projektionssystems mit einer Bildanalyse-Einrichtung zur dynamischen Bestimmung der aktuellen Hauptaperturachse der Mehrkanaloptik;

Fig. 16    ein schematisches Blockdiagram eines Projektionssystems, das auf dem Projektionssystem von Fig. 15 aufbaut und weiter einen Bildgeber-Wähler umfasst;

Fig. 17    eine schematische Veranschaulichung der Bestimmung der mittleren Hauptgradientenrichtung innerhalb eines Bildes;

Fig. 18    eine schematische Veranschaulichung der Histogram-basierten Bestimmung der Hauptgradientenrichtung innerhalb eines Bildes; und

Fig. 19    eine schematische Veranschaulichung des Zusammenhangs zwischen überwiegender Kantenrichtung und Haupgradientenrichung innerhalb eines Bildes.

Bevor im Folgenden die vorliegende Erfindung anhand der Figuren näher erläutert wird, wird darauf hingewiesen, dass in den nachfolgend dargestellten Ausführungsbeispielen gleiche Elemente oder funktionell gleiche Elemente in den Figuren mit den gleichen Bezugszeichen versehen sind. Eine Beschreibung von Elementen mit gleichen Bezugszeichen ist daher gegenseitig austauschbar und/oder in den verschiedenen Ausführungsbeispielen aufeinander anwendbar.

Die nachfolgend beschriebenen Ausführungsbeispiele befassen sich mit der Manipulation (z. B. Erhöhung der Schärfentiefe) mit hohen Anforderungen hinsichtlich Systemkompaktheit und projiziertem Lichtstrom.

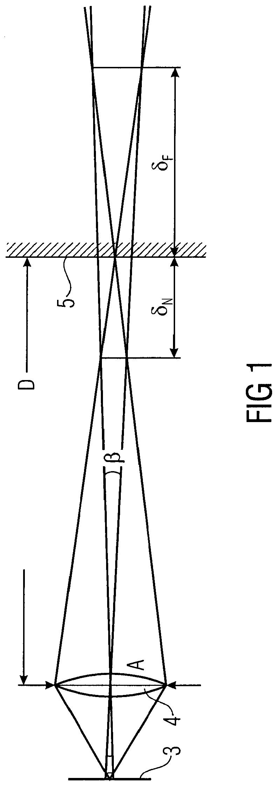

Die schirmseitige Schärfentiefe eines Projektors (engl. "depth of focus") ergibt sich gemäß geometrischer Überlegungen aus der Projektionsdistanz D, der Pupillenausdehnung A und dem akzeptablen Unschärfewinkel β gemäß Fig. 1 durch folgende Beziehung

$$\delta_{N,F} = \frac{D^2 \beta}{(A \pm D\beta)} \qquad (1)$$

(aus "Modern Optical Engineering" von W.J. Smith, McGraw-Hill, 2007). Fig. 1 zeigt ein 2D-Layout zur Herleitung der Schärfentiefe eines klassischen Einzelapertur-Projektors. Von einem Bildgeber 3 (z.B. einem Dia oder einer strukturierten Maske) gehen Lichtstrahlen aus in Richtung einer Projektionslinse 4. Das Licht stammt entweder von einer Lichtquelle, die in Fig. 1 nicht gezeigt ist, oder von dem Bildgeber 3 selber. Wenn das Licht von einer Lichtquelle stammt, kann diese entweder links von dem Bildgeber 3 angeordnet sein, in welchem Fall der Bildgeber von dem von der Lichtquelle ausgesendeten Licht durchstrahlt wird. Die Lichtquelle kann alternativ auch rechts von dem Bildgeber angeordnet sein, in welchem Fall der Bildgeber 3 zum Beispiel als reflektierender Bildgeber arbeitet. Die Projektionslinse 4 fokussiert das von dem Bildgeber 3 ausgesendete Licht auf eine Projektionsfläche, die sich in dem Abstand D von der Projektionslinse befindet. Der Schärfentiefebereich unterteilt sich gemäß Fig. 1 und Formel (1) in einen nahen Schärfentiefebereich $\delta_n$ und einen fernen Schärfentiefebereich $\delta_f$ und erstreckt sich somit von D- $\delta_n$ bis D+ $\delta_f$. Bei genauerer Betrachtung der Beziehung (1) fällt auf, dass die Pupillenausdehnung A, die auch "Apertur" genannt wird, im Nenner steht, woraus ersichtlich ist, dass eine größere Pupillenausdehnung zu einer geringeren Schärfentiefe führt. Die Pupillenausdehnung A hat allerdings auch einen Einfluss auf die Lichtmenge, die von dem Projektor projiziert werden kann: Je kleiner die Pupillenausdehnung A zugunsten einer größeren Schärfentiefe gemacht wird, desto weniger Licht kann die Pupille passieren, was sich wiederum in einem dunkleren projizierten Bild auswirkt.

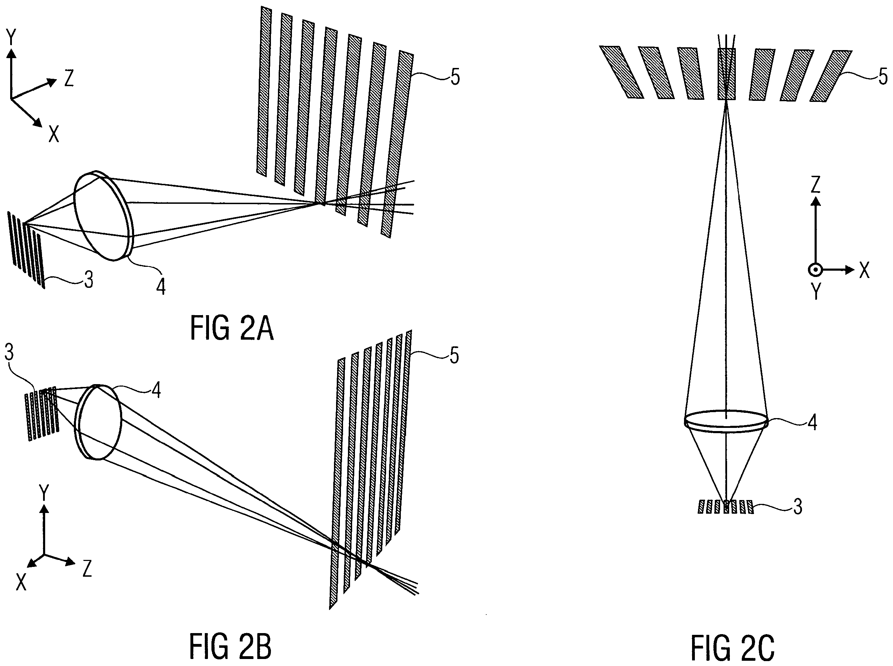

Die oben genannten Anforderungen können beispielsweise von einem klassischen Einzelapertur-Projektor erfüllt werden. Die Figuren 2A, 2B und 2C stellen einen derartigen klassischen Einzelapertur-Projektor in verschiedenen Perspektivansichten dar, der aufgrund seines optischen Aufbaus stets einen Kompromiss aus Kompaktheit (Minimalbrennweite) und übertragbarem Lichtstrom (Diafläche) darstellt (siehe "Meeting the Challenges of Developing LED-based Projection Display", von E. Geissler, Proc. SPIE 6196, 616901-616912 (2007)). Die Fig. 2A bis 2C zeigen ein derartiges klassisches Projektionssystem zur vergrößerten Abbildung eines Linienmusters auf die Projektionsfläche, dessen eindimensionale Strukturen parallel zur y-Achse verlaufen. Aufgrund der kreisförmigen Austrittspupille der Projektionslinse 4 entspricht die Schärfentiefe in x-Richtung der in y-Richtung, gemäß der oben angegebenen Beziehung (1).

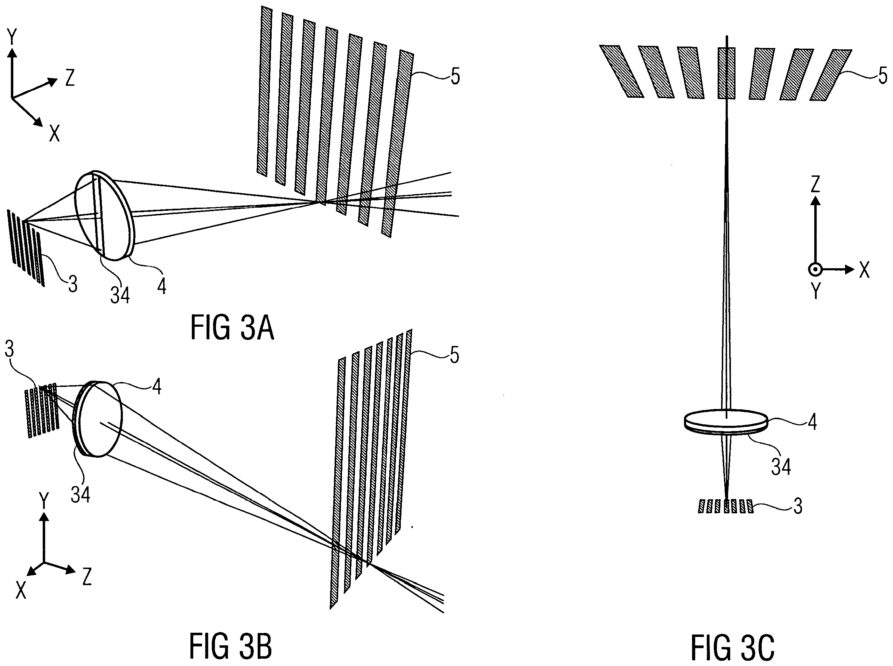

Eine Erhöhung der Schärfentiefe in einer Vorzugsrichtung (im Beispiel: x-Richtung) kann durch Einengung der Austrittspupille der Projektionsoptik erzielt werden (Apertur A in Fig. 1). Dies kann in Form einer mechanischen Blende oder durch asymmetrische Beleuchtung der Pupille realisiert werden. Die Fig. 3A, 3B und 3C zeigen verschiedene schematische Perspektivansichten des Systems aus Fig. 2A-2C mit einer in der x-Richtung stark verengten Pupille 34. Insbesondere zeigen die Fig. 3A-3C einen klassischer Einzelapertur-Projektor mit angepasster Austrittspupille zur Erhöhung der Schärfentiefe für Strukturen mit Orientierung parallel zur y-Achse. Durch diese Anordnung ist die Schärfentiefe in x-Richtung gegenüber der Schärfentiefe in y-Richtung bei einer Veränderung des Schirmabstandes in z-Richtung deutlich erhöht. Bei Variation des Schirmabstandes ohne Refokussierung tritt eine Verwaschung vor allem in y-Richtung auf, die Schärfe bzw. der Kontrast entlang der x-Achse bleibt weitgehend erhalten. Zum Beispiel weisen einige Spaltlampen für ophthalmologische Untersuchungen eine derartige Anordnung auf. Eine Beleuchtungsoptik nach Köhler erzeugt ein Abbild der Lichtquelle innerhalb der Pupille der Projektionsoptik. Die Projektionsoptik bildet eine vorgeschaltete spaltförmige Apertur auf das Auge des Patienten ab. Bei einigen Systemen wird das Filament der Lichtquelle nun vorzugsweise parallel zur Spaltorientierung ausgerichtet, um die Pupille der Projektionsoptik mit dem stark asymmetrischen Abbild des Filaments auszuleuchten. Die linienhafte Form der Lichtquelle erzeugt somit eine stark asymmetrische Ausleuchtung der Pupille. Die Schärfentiefe der projizierten Linie wird somit senkrecht zu ihrer Orientierung erhöht. Der projizierte Spalt wird für unterschiedliche Abstände vor allem entlang seiner Ausbreitungsrichtung weichgezeichnet. Dies ermöglicht während einer Augenuntersuchung die Abbildung einer scharfen Linie über einen vergrößerten Arbeitsbereich.

Eine weiteres Beispiel ist die sog. Scheiner- bzw. Hartmannblende: Sie wird direkt innerhalb der Pupille der Abbildungsoptik platziert und dient als Hilfsmittel zur Justage optischer Geräte. Die Scheinerblende manipuliert die Schärfentiefe des optischen Gerätes in der Form, dass sich kollimierte Bündel eines Objektpunkts lediglich bei richtiger Fokussierung zu einem Punktbild überlagern. Bei Dejustage entfernen sich die Abbildungen gemäß der vorgegebenen Pupillenform wieder voneinander. Die somit künstlich herabgesetzte bzw. manipulierte Schärfentiefe erleichtert die Justage optischer Aufbauten, z.B. von Teleskopen.

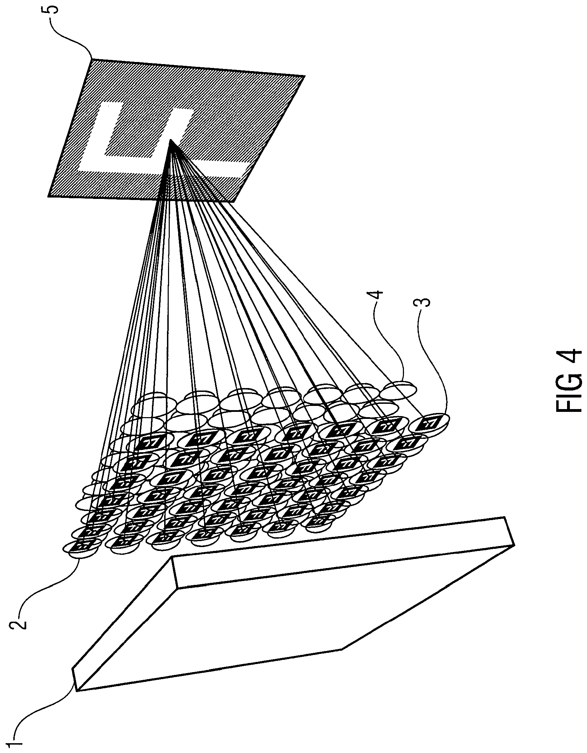

Eine andere Variante ist eine Multiapertur-Anordnung von Mikroprojektoren (Array-Projektion), welche zum Beispiel in der deutschen Patentanmeldung DE 10 2009 024 894 A1 und einem Artikel von M. Sieler, P. Schreiber, P. Dannberg, A. Bräuer und A. Tünnermann mit dem Titel "Ultraslim fixed pattern projectors with inherent homogenization of illumination", Appl. Opt. 51, 64-74 (2012) detailliert beschrieben wird. Dieser Multiapertur-Ansatz ermöglicht die Entkoppelung der Systembaulänge des Projektionssystems vom transmittiertem Flux (Lichtstrom), was kompakte und gleichzeitig helle Projektionssysteme ermöglicht. Darin wird eine regelmäßige, zweidimensionale Anordnung der Subaperturen innerhalb des Projektorenarrays beschrieben, wobei die Schärfentiefe von der Gesamtausdehnung des Arrays bestimmt wird. Fig. 4 zeigt eine schematische Perspektivansicht eines Array-Projektors mit regelmäßig angeordneten Projektionskanälen. Beispielhaft dargestellt ist eine Anordnung aus 7x7 quadratisch dicht gepackten Einzelprojektoren mit flächenhafter Hinterleuchtung durch eine Lichtquelle 1. Jeder der Einzelprojektoren umfasst eine Feldlinse 2, ein bildgebendes Element (z.B. ein Dia, eine strukturierte Maske, ein LCD-Element oder, allgemeiner, ein Teilbereich eines Bildgebers) und eine Projektionslinse 4.

Bei dem in Fig. 4 gezeigten Ansatz ist die zulässige Projektionsdistanz jedoch auf einen relativ engen Bereich beschränkt, da nur für diesen Distanzbereich die Überlagerung der Abbildungen der von den verschiedenen Einzelprojektoren des Array-Projektors projizierten Einzelbilder in der vorgesehenen Weise funktioniert. Bei einer Abweichung von der idealen Projektionsdistanz überlagern sich die einzelnen Abbildungen nicht mehr deckungsgleich, so dass das Gesamtbild unscharf erscheint, obwohl jede einzelne Abbildung eines Einzelbilds für sich alleine betrachtet mit hoher Schärfe projiziert wird.

Ausführungsbeispiele beschreiben die Anordnung der Subaperturen bzw. ihrer Einhüllenden innerhalb eines Array-Projektors in der Art, dass eine Manipulation (z.B. Erhöhung der Schärfentiefe) der allgemeinen Abbildungseigenschaften bei Defokussierung eines Projektionssystems erfolgen kann.

Bei einigen Ausführungsformen ist die Form der Gesamtpupille bzw. Einhüllende der Subaperturen an das zu projizierende Bild oder Muster angepasst. Bei einigen dieser Ausführungsbeispiele kann auf diese Weise eine Vergrößerung der Schärfentiefe zur Projektion von eindimensionalen Strukturen erreicht werden. Bei einer anderen Untergruppe innerhalb dieser Ausführungsbeispiele kann eine Anordnung der Subaperturen in Form eines Musters vorgesehen sein.

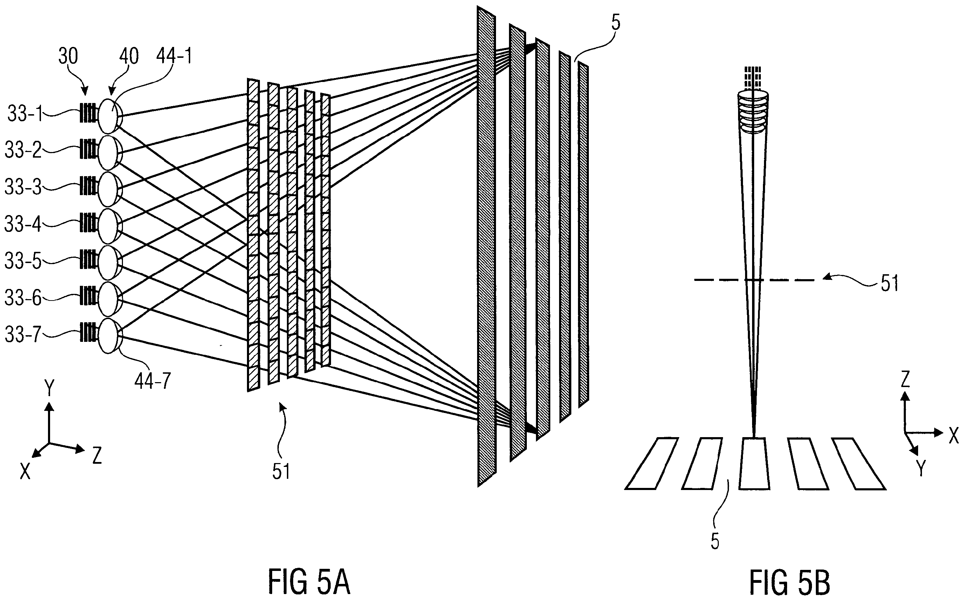

Beispielhaft wird anhand von Fig. 5A und 5B zunächst eine Erhöhung der Schärfentiefe durch spaltenweise angeordnete Projektionskanäle dargestellt, also eine Vergrößerung der Schärfentiefe zur Projektion von eindimensionalen Strukturen. Durch Ausbildung einer stark asymmetrischen Gesamtpupille z.B. in Form einer Ellipse, eines Rechteckes oder einer Linie (z. B. mit einem Seitenverhältnis von x:y = 1:7) tritt bei Verschiebung des Schirmes entlang der z-Achse vornehmlich eine Unschärfe des projizierten Musters in y-Richtung auf. Bei der Projektion eines Liniengitters, dessen Linien parallel zur y-Achse orientiert sind, tritt eine Unschärfe des Bildes bei Variation des Schirmabstandes entlang der z-Achse vornehmlich parallel zum Streifenmuster auf. Der Kontrast orthogonal zum Gittermuster bleibt über einen deutlich größeren Tiefenbereich (Abstandsbereich) erhalten. Die Multiapertur-Anordnung gewährleistet aufgrund der kurzen Brennweiten innerhalb der Einzelkanäle eine kurzbauende Projektionsoptik, die flächenhafte Anordnung gewährleistet gleichzeitig die Übertragung eines großen Lichtstromes. Die Pupille wird somit vorzugsweise in Strukturrichtung ausgedehnt.

Das in Fig. 5A und 5B dargestellte Projektionsdisplay umfasst einen Bildgeber 30 und eine Mehrkanaloptik 40. Der Bildgeber 30 weist in dem dargestellten Beispiel sieben Teilbereiche 33-1 bis 33-7 auf. Die Teilbereiche 33-1 bis 33-7 sind als eindimensionales Array in einer Bildgebungsebene des Bildgebers 30 angeordnet. Jeder der Teilbereiche 33-1 bis 33-7 weist eine Struktur auf, die während eines Betriebs des Projektionsdisplays das durch den Bildgeber 30 scheinende oder von diesem reflektierte Licht mit einem jeweiligen Muster versehen. Die jeweiligen Strukturen der Teilbereiche 33-1 bis 33-7 können als statische (z.B. unveränderliche) Strukturen ausgeführt sein, wie zum Beispiel Chrommasken auf Glasträgern.

Insbesondere bei Projektionsdisplays, die für die 3D-Vermessung mittels Streifenmuster verwendet werden können, kann das Streifenmuster als statische Struktur in den jeweiligen Teilbereichen des Bildgebers ausgeführt sein. Das Streifenmuster kann zum Beispiel ein trigonometrisches Muster sein, d.h. ein gemäß einer trigonometrischen Funktion variierender Graustufenverlauf oder Helligkeitsverlauf, der z.B. mittels eines feinen, binären Linienmuster nachgebildet wird. Die in den jeweiligen Teilbereichen ausgeführten statischen Strukturen können eine Ausrichtung haben, die parallel oder im Wesentlichen parallel zu der Richtung der größten Gesamtapertur der Mehrkanaloptik verläuft. Auf diese Weise sind die Gesamtapertur der Mehrkanaloptik und das mittels der statischen Strukturen des Bildgebers erzeugte Gesamtbild aufeinander abgestimmt, wodurch die Schärfentiefe für verschiedene Bildrichtungen innerhalb des Gesamtbilds unterschiedlich und damit an die Erfordernisse für eine scharfe Darstellung der Bildstrukturen angepasst ist.

Bei alternativen Ausführungsformen können die Teilbereiche 33-1 bis 33-7 während des Betriebs konfigurierbar bzw. ansteuerbar sein, so dass sich zu unterschiedlichen Zeiten unterschiedliche Muster (dynamisch) von einem Teilbereich erzeugen lassen. Zu diesem Zweck können verschiedene Techniken zum Einsatz kommen, zum Beispiel LCD (engl. "Liquid Crystal Display" - "Flüssigkristallanzeige"), LCoS (engl. "Liquid Crystal on Silicon" - "Flüssigkristall auf Silizium[substrat]") oder DMD (engl. "Digital Micromirror Device" - "(digitaler) Mikrospiegelaktor"). Die Teilbereiche des Bildgebers 30 können je nach verwendeter Technik von dem für die Projektion verwendeten Licht durchleuchtet werden oder dieses reflektieren. Für jeden Teilbereich 33-1 bis 33-7 kann ein eigener Chip vorgesehen sein, oder mehrere oder alle Teilbereiche 33-1 bis 33-7 können auf einem Chip integriert sein.

Die Mehrkanaloptik 40 weist sieben optische Kanäle 44-1 bis 44-7 auf, die in Fig. 5A und 5B schematisch durch die jeweiligen Projektionslinsen repräsentiert werden. Jeder der optischen Kanäle 44-1 bis 44-7 ist einem der Teilbereiche 33-1 bis 33-7 des Bildgebers 30 zugeordnet, um diesen abzubilden. Die Abbildungen der Einzelbilder der jeweiligen Teilbereiche des Bildgebers 30 fügen sich in bzw. auf einer Projektionsfläche zu einem Gesamtbild 5 zusammen. Dieses Zusammenfügen der Abbildungen der Einzelbilder kann eine Überlagerung, eine "gekachelte" Anordnung oder eine teilweise Überlappung der Abbildungen der Einzelbilder sein. In Fig. 5A und 5B ist das Gesamtbild 5 als ein auf einer Projektionsfläche projiziertes senkrechtes Streifenmuster dargestellt. Im dargestellten Beispiel wird das Gesamtbild 5 durch eine Überlagerung der Abbildungen der Einzelbilder erzeugt. Im Vergleich dazu ist in Fig. 5A und 5B auch ein zweites Gesamtbild 51 dargestellt, dass sich bei einem geringeren Projektionsabstand aufgrund einer Überlagerung der Abbildungen der Einzelbilder ergeben würde. Anhand des zweiten Gesamtbilds 51 ist zu erkennen, dass das Streifenmuster auch bei der sehr viel kürzeren Projektionsdistanz mit ausreichender Schärfe projiziert werden kann.

Bei dem in Fig. 5A und 5B dargestellten Ausführungsbeispiel sind die Kanäle der Mehrkanaloptik in einer länglichen Anordnung angeordnet, wobei die längliche Anordnung hier gerade ist. Wie man an dem projizierten Gesamtbild 5 erkennen kann, weist das Streifenmuster eine Vielzahl von länglichen Bildmerkmalen auf, die sich parallel zur y-Richtung erstrecken (im Folgenden auch als "senkrechte" Richtung bezeichnet). Als längliche Bildmerkmale können zum Beispiel die fünf schwarzen, senkrechten Balken des Streifenmuster angesehen werden. Alternativ ist es aber auch möglich, einen Hell-Dunkel-Übergang als längliches Bildmerkmal anzusehen. Es ist in Fig. 5A und 5B zu erkennen, dass die von den Kanälen der Mehrkanaloptik 40 gebildete längliche Anordnung hinsichtlich ihrer Orientierung (Ausrichtung) ähnlich ist zu den in dem Streifenmuster 5 enthaltenen länglichen, senkrechten Bildmerkmalen. Somit weist die Mehrkanaloptik 40 in der y-Richtung, also entlang des zumindest einen länglichen Bildmerkmals, eine größere künstliche Apertur auf, als orthogonal dazu, hier also insbesondere in der x-Richtung. Auf diese Weise kommt es aufgrund der relativ großen Apertur in y-Richtung zwar zu einer relativ großen Unschärfe in der y-Richtung. Da sich die länglichen Bildmerkmale des Streifenmusters 5 jedoch ebenfalls in der y-Richtung erstrecken ist diese Unschärfe in y-Richtung für einen Betrachter des Gesamtbilds 5 nicht wahrnehmbar oder zumindest so gut wie nicht wahrnehmbar. Das Gesamtbild 5 wird entlang der Bildmerkmale weich gezeichnet, wodurch lediglich bereits hochgradig ähnliche oder sogar identische Bildbereiche überlagert werden. Da das Streifenmuster 5 in x-Richtung im Vergleich zur y-Richtung einen größeren Anteil an höheren Ortsfrequenzen aufweist (d.h. dass das Gesamtbild 5 in x-Richtung mehr variiert, als in y-Richtung), sollte eine Unschärfe in x-Richtung möglichst klein bleiben, damit diese Details des Gesamtbilds 5 mit ausreichender Schärfe auf die Projektionsfläche projiziert werden können. Dies wird von dem Projektionsdisplay dadurch gewährleistet, dass die Gesamtapertur der Mehrkanaloptik 40 in x-Richtung sehr viel kleiner ist als die Gesamtapertur in y-Richtung. Insbesondere entspricht die Gesamtapertur in x-Richtung der Apertur von einem optischen Kanal, da die längliche Anordnung einspaltig ist. Die Mehrkanaloptik 40 hat in dem dargestellten Ausführungsbeispiel jedoch eine siebenmal größere Fläche, die für den zu projizierenden Lichtstrom zur Verfügung steht, als ein einzelner Kanal 44-1 bis 44-7. Somit kann ein sehr viel helleres Gesamtbild 5 projiziert werden, als mit nur einem Kanal. Gleichzeitig werden die optischen Abbildungseigenschaften der Mehrkanaloptik durch die mit der Flächenvergrößerung einhergehenden Aperturvergrößerung nur für die Richtung innerhalb des Gesamtbilds 5 gegenüber einem Einzelkanal verändert, in welcher sich eine resultierende größere Unschärfe nur unwesentlich auswirkt.

Dadurch, dass die Mehrkanaloptik 40 hinsichtlich der Anordnung ihrer Einzelkanäle an ein oder mehrere Bildmerkmale des zu projizierenden Gesamtbilds 5 angepasst ist bzw. angepasst werden kann, ist es möglich, die Forderungen nach möglichst hoher Projektionshelligkeit (d.h. möglichst große Apertur) und großer Schärfentiefe (d.h. möglichst kleine Apertur) derart miteinander zu kombinieren, dass in einer ersten Bildrichtung ein größeres Gewicht auf die hohe Projektionshelligkeit und in einer zweiten Bildrichtung ein größeres Gewicht auf die große Schärfentiefe gelegt wird. Alternativ zu der obigen Beschreibung der Mehrkanaloptik 40 könnte diese auch so beschrieben werden, dass die Mehrkanaloptik 40 unterschiedliche Gesamtaperturen in zwei zur Projektionsrichtung orthogonalen Richtungen aufweist, wobei die größere Gesamtapertur einen Winkel von maximal 20 Grad, bevorzugt maximal 10 Grad, weiter bevorzugt maximal 5 Grad, mit einer Bildachse geringster Bilddynamik des Gesamtbilds 5 einschließt.

Bezüglich der Anordnung der Subaperturen in Form eines Musters können diese innerhalb eines Arrays in der Form angeordnet werden, dass ihre Einhüllende eine definierte Form, ein Symbol, einen Text o.ä. ergibt. Somit kann bei direktem Betrachten des Projektionsdisplays mit dem Auge bzw. auf einem Schirm im Nahfeld diese Form vom Betrachter wahrgenommen werden. Gegenüber klassischen Systemen mit einem (einzigen) abbildenden Kanal kann diese Eigenschaft in Kombination mit einer arrayhaften Beleuchtung ohne Effizienzeinbußen realisiert werden.

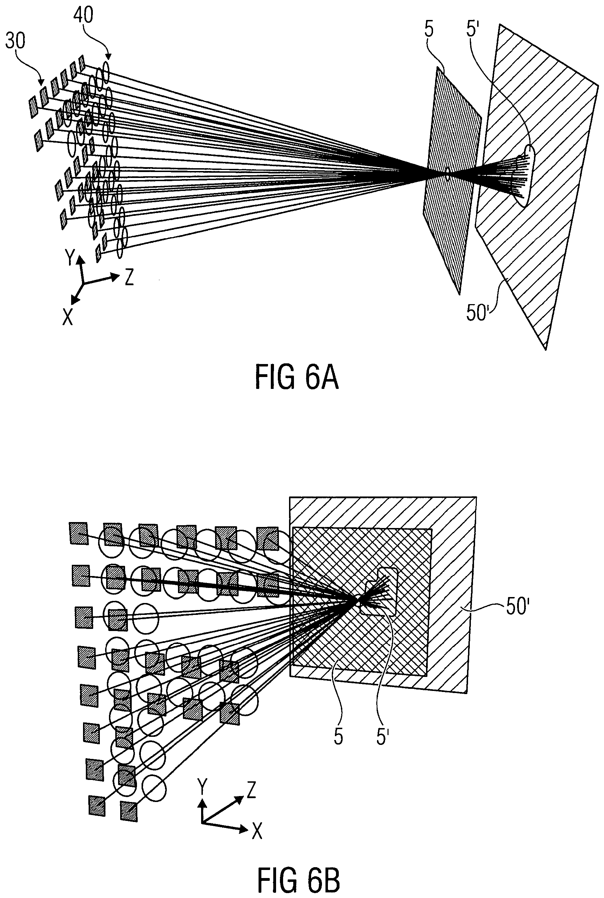

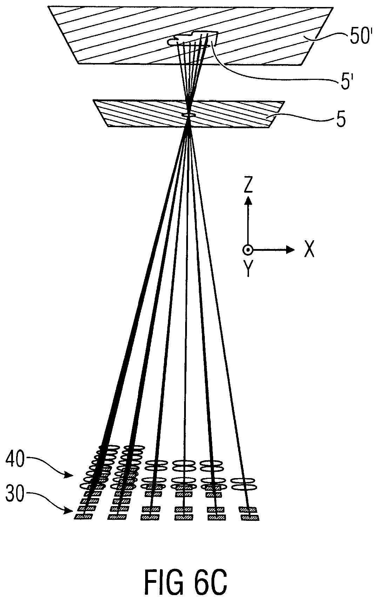

Fig. 6A, 6B und 6C zeigen verschieden perspektivische Ansichten eines Projektionsdisplays mit symbolähnlich angeordneter Mehrkanaloptik, deren Unschärfeverhalten in Abhängigkeit von der Projektionsdistanz variiert.

Die Mehrkanaloptik 40 weist eine symbolähnliche Subapertur-Anordnung auf, die im dargestellten Beispiel wie der Buchstabe "F" gestaltet ist. Auch der Bildgeber 30 weist diese symbolähnliche Anordnung auf. Im vorliegende Fall hat die Mehrkanaloptik 40 dreißig Kanäle auf. Der Bildgeber 30 weist dementsprechend dreißig Teilbereiche auf.

Befindet sich die Projektionsfläche in einem Abstand von dem Projektionsdisplay, welcher innerhalb des Schärfentiefebereichs der Mehrkanaloptik 40 um die ideale Projektionsdistanz ist, so wird das Gesamtbild 5 auf die Projektionsfläche projiziert, welches durch den Bildgeber 30 bestimmt wird. Die Abbildungen der Einzelbilder überlagern sich auf der innerhalb des Schärfentiefebereichs liegenden Projektionsfläche derart, dass zueinander gehörende Bildpunkte der Einzelbilder im Wesentlichen an dieselbe Stelle der Projektionsfläche projiziert werden. Auf diese Weise wird das von dem Bildgeber 30 definierte Gesamtbild 5 scharf auf die Projektionsfläche projiziert. Stellvertretend für andere Bildpunkte ist in den Figuren 6A bis 6C jeweils ein zentraler Bildpunkt samt zugehörigem Lichtstrahl dargestellt. Man sieht, dass diese zentralen Bildpunkte in die Mitte des Gesamtbilds 5 projiziert werden, wenn sich die Projektionsfläche bei der idealen Projektionsdistanz befindet.

Die Figuren 6A bis 6C zeigen auch eine beispielhafte zweite Projektionsfläche 50', die weiter als die ideale Projektionsdistanz von dem Projektionsdisplay entfernt ist. Die von den zentralen Bildpunkten ausgehenden Strahlen fächern sich wieder auf, woraus eine unscharfe Abbildung des Gesamtbilds resultiert, wenn das Gesamtbild auf die zweite Projektionsfläche projiziert wird. Die Auffächerung der Strahlen folgt jedoch auch der symbolähnlichen Subapertur-Anordnung, so dass die Vielzahl der zentralen Bildpunkte auf der zweiten Projektionsfläche 50' den Buchstaben "F" nachbildet, der aufgrund der Strahlengänge jedoch um 180 Grad gedreht ist bezüglich der Anordnung der Kanäle der Mehrkanaloptik 40. Bei der in den Figuren 6A bis 6C dargestellten Entfernung kommt es noch zu einer teilweisen Überlappung der Abbildungen der Einzelbilder. Wenn sich die zweite Projektionsfläche 50' noch weiter weg von dem Projektionsdisplay befinden würde, würden sich die Abbildungen der Einzelbilder, die von einzelnen Kanälen projiziert werden, nicht mehr teilweise überlappen, sondern mehr und mehr auseinander driften, wobei sie jedoch in ihrer Gesamtheit die "F"-Form der symbolähnlichen Subapertur-Anordnung beibehalten. Die Abbildungen der Einzelbilder können dabei über einen weiten Bereich der Projektionsdistanz scharf bleiben, da die einzelnen Kanäle einen großen Schärfentiefebereich haben können.

Wenn sich die zweite Projektionsfläche 50' näher an dem Projektionsdisplay befindet als die ideale Projektionsdistanz wird ebenfalls wieder das von der symbolähnlichen Anordnung der Kanäle vorgegebene Symbol in Form eines "F" projiziert, was insbesondere in Fig. 6B aus dem Strahlengang der verschiedenen Strahlen erkennbar ist.

Die Mehrkanaloptik kann eine eindimensionale Kanalanordnung, eine konzentrische Kanalanordnung, eine quadratische Kanalanordnung, eine hexagonale Kanalanordnung oder eine stochastische Kanalanordnung aufweisen.

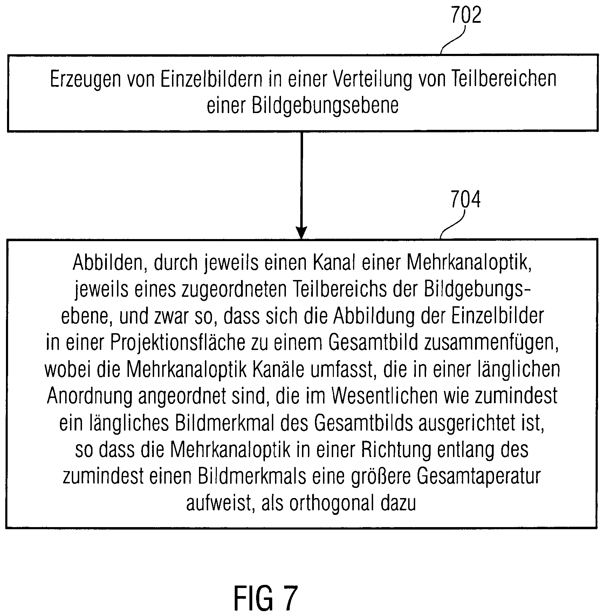

Fig. 7 zeigt ein schematisches Flussdiagramm eines Verfahrens zum Anzeigen eines Gesamtbilds gemäß Ausführungsbeispielen. Das Verfahren umfasst einen Schritt 702 des Erzeugens von Einzelbildern in einer Verteilung von Teilbereichen einer Bildgebungsebene. Das Erzeugen der Einzelbilder kann statisch erfolgen, d.h. durch Beleuchten eines statischen Bildgebers (z.B. einer Chrommaske). Alternativ kann das Erzeugen der Einzelbilder auch dynamisch erfolgen, zum Beispiel mittels entsprechender optischer Aktuatoren, z.B. auf der Basis von LCD-, LCoS- oder DMD-Technik.

Das Erzeugen der Einzelbilder kann bei Ausführungsbeispielen in Abhängigkeit von einem kleinsten Abstand und einem größten Abstand zwischen der Mehrkanaloptik und der Projektionsfläche erfolgen. Auf diese Weise kann der benötigte Schärfentiefebereich bei der Erzeugung der Einzelbilder berücksichtigt werden, indem zum Beispiel eine Position oder Skalierung der Einzelbilder in Abhängigkeit von dem kleinsten und dem größten Abstand bestimmt wird. Durch diese Maßnahme kann erreicht werden, dass es zu einer gewünschten (konstruktiven oder destruktiven) Überlagerung der Abbildungen der Einzelbilder auf der Projektionsfläche kommt.

Das Verfahren zum Anzeigen eines Gesamtbilds umfasst weiterhin einen Schritt 704, während welchem die Teilbereiche der Bildgebungsebene abgebildet werden, und zwar jeweils ein Teilbereich durch jeweils einen zugeordneten Kanal einer Mehrkanaloptik. Das Abbilden der zugeordneten Teilbereiche der Bildgebungsebene erfolgt so, dass sich die Abbildungen der Einzelbilder in bzw. auf der Projektionsfläche zu einem Gesamtbild zusammenfügen. Zumindest einige Kanäle der Mehrkanaloptik sind in einer länglichen Anordnung angeordnet, die im Wesentlichen wie zumindest ein längliches Bildmerkmal des Gesamtbilds ausgerichtet ist, so dass die Mehrkanaloptik in einer Richtung entlang des zumindest einen Bildmerkmals eine größere künstliche Apertur bzw. Gesamtapertur aufweist, als orthogonal dazu.

Bei Ausführungsbeispielen kann jedem Kanal der Mehrkanaloptik eine individuell steuerbare Lichtquelle zugeordnet sein. Das Abbilden der jeweils zugeordneten Teilbereiche kann dann folgende Unteraktionen bzw.-schritte umfassen: Empfangen des Gesamtbilds zur Projektion mittels eines dynamischen Bildgebers; Bestimmen von Teilbilddaten des Gesamtbilds, die den Teilbereichen der Bildgebungsebene zugeordnet sind; Erkennen und Lokalisieren des zumindest einen länglichen Bildmerkmals des Gesamtbilds; Ermitteln einer Teilmenge der Kanäle der Mehrkanaloptik, die eine dem zumindest einen länglichen Bildmerkmal ähnelnde Anordnung bilden; Laden der Teilbilddaten in den dynamischen Bildgeber; und Aktivieren derjenigen Lichtquellen, die den Kanälen der Teilmenge zugeordnet sind.

Auf diese Weise kann die künstliche Gesamtapertur der Mehrkanaloptik an ein aktuell zu projizierendes Bild und die darin enthaltenen Bildmerkmale angepasst werden. Insbesondere kann das Bild analysiert werden und eine Bildachse bzw. -richtung minimaler Bilddynamik kann für das Bild ermittelt werden. Unter der Annahme, dass es einem Betrachter des projektierten Gesamtbilds am wenigsten auffallen wird, wenn die Projektion in der ermittelten Bildachse bzw. -richtung eine höhere Unschärfe aufweist, als in anderen Richtungen, kann nun die künstliche Gesamtapertur der Mehrkanaloptik auf die ermittelte Bildachse bzw. -richtung ausgerichtet werden, so dass in dieser Richtung zu Gunsten einer Erhöhung des zu projizierenden Lichtstroms eine größere künstliche Gesamtapertur erzielt wird, als in anderen Richtungen. Je nachdem, wie exakt die Richtung der größten künstlichen Gesamtapertur der Mehrkanaloptik eingestellt werden kann, kann sich bereits dann einen nutzbarer Effekt einstellen, wenn die Bildachse minimaler Bilddynamik und die Richtung der größten künstlichen Gesamtapertur einen Winkel von bis zu 20 Grad, vorzugsweise bis zu 10 Grad und weiter vorzugsweise bis zu 5 Grad einschließen. Die Mehrkanaloptik und gegebenenfalls auch der Bildgeber können zu diesem Zweck zum Beispiel eine kreuzförmige oder sternförmige Anordnung mehrerer eindimensionaler oder schmaler Arrays von optischen Kanälen bzw. Teilbereichen aufweisen, zwischen denen je nach ermittelter Bildachse minimaler Bilddynamik umgeschaltet werden kann.

Alternativ oder zusätzlich zu dem Vorhandensein von individuell steuerbaren Lichtquellen für die Kanäle der Mehrkanaloptik kann eine Auswahl der auf die Bildachse minimaler Bilddynamik abgestimmten Kanäle auch durch ein Abblenden bzw. Dunkelschalten nicht benötigter Teilbereiche des Bildgebers erfolgen.

Ausführungsbeispiele weisen somit eine Erhöhung der Schärfentiefe für eindimensionale Strukturen durch asymmetrische bzw. anisotrope Anordnung von Subaperturen auf. Es ist auch denkbar, die Subaperturen als Symbol o. ä. anzuordnen, um auf diese Weise das Unschärfeverhalten des projizierten Musters maßzuschneidern Der sog. Blur eines jeden Bildpunktes entspricht somit der Symbolanordnung der Subaperturen.

Es besteht gegenüber klassischen Projektionssystemen die Möglichkeit einer maßgeschneiderten Schärfentiefe bzw. Abbildungseigenschaften für eindimensionale, periodische und nicht-periodische Lichtmuster innerhalb starker variierender Arbeitsabstände. Mögliche Anwendungsgebiete für Ausführungsbeispiele sind die 3D-Messtechnik, Beleuchtung und Informationsdarstellung.

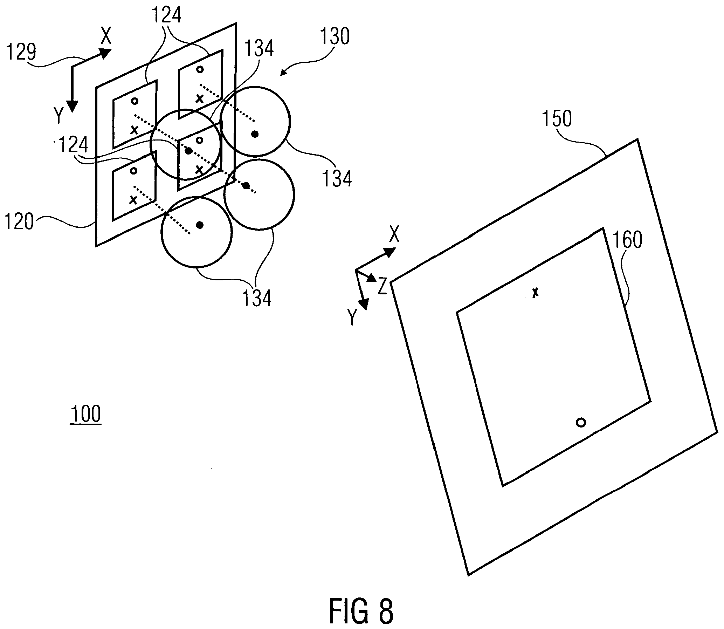

Die folgende Beschreibung der Fig. 8 bis 11 bezieht sich auf Projektionsdisplays, die als mögliche Ausgangspunkte für die Entwicklung von hierin beschriebenen Ausführungsbeispielen angesehen werden können. Die in den Figuren 8 bis 11 verwendeten Bezugszeichen stimmen nicht unbedingt mit den zuvor verwendeten Bezugszeichen überein.

Fig. 8 zeigt ein Projektionsdisplay 100, das einen möglichen Ausgangspunkt für die Entwicklung von hierin beschriebenen Ausführungsbeispielen darstellt. Das Projektionsdisplay 100 weist einen Bildgeber 120 und eine Mehrkanaloptik 130 auf. Der Bildgeber 120 ist ausgebildet, um in einer Verteilung von Teilbereichen 124 einer Bildgebungsebene 129 des Bildgebers Einzelbilder zu erzeugen bzw. darzustellen. Die Mehrkanaloptik 130 ist konfiguriert, um pro Kanal jeweils einen zugeordneten Teilbereich 124 des Bildgebers 120 abzubilden, und zwar so, dass sich die Abbildung der Einzelbilder in einer Projektionsfläche 150 zu einem Gesamtbild 160 zumindest teilweise überlagert.

In Fig. 8 ist das Projektionsdisplay 100 exemplarisch vierkanalig aufgebaut, d.h. der Bildgeber 120 erzeugt Einzelbilder in vier Teilbereichen 124 und die Mehrkanaloptik 130 ist dementsprechend vierkanalig aufgebaut mit beispielsweise einer jeweiligen Projektionsoptik 134 pro Kanal. Die Anzahl ist allerdings lediglich exemplarisch. Auch die zweidimensionale Verteilung der Teilbereiche 124 und der Projektionsoptiken 134 ist lediglich exemplarisch. Die Verteilung könnte auch entlang einer Linie realisiert sein. Zudem ist die Verteilung nicht auf regelmäßige zweidimensionale Verteilungen eingeschränkt. Wie später noch erörtert werden wird, ist der Mittenabstand der Projektionsoptiken 134 beispielsweise gegenüber einem Mittenabstand der Teilbereiche 124 in der Bildgebungsebene 129 verringert. Details hierzu werden noch im Folgenden geliefert.

Das Projektionsdisplay 100 von Fig. 8 ist nun so ausgelegt, dass die Projektionsfläche keine ebene, zu der Bildgebungsebene 129 parallele Projektionsfläche sein muss. Die Projektionsfläche, in der das Gesamtbild entsteht, in der sich also die Einzelbilder scharf überlagern, d.h. quasi der Schärfentiefenbereich, kann vielmehr eine Freiformfläche oder eine gegenüber der Bildgebungsebene 129 verkippte Projektionsfläche 150 sein, wie es in Fig. 8 exemplarisch dargestellt ist.

Um die Abweichung gegenüber der planparallelen Ausrichtung der Projektionsfläche 150 gegenüber der Bildgebungsebene 129 auszugleichen, ist der Bildgeber 120 derart ausgebildet, dass sich Konstellationen von Punkten in den Einzelbildern, die sich jeweils durch die Mehrkanaloptik 130 in einem jeweiligen gemeinsamen Punkt in dem Gesamtbild 160 überlagern, abhängig davon unterscheiden, welche Entfernung der jeweilige gemeinsame Punkt in dem Gesamtbild von der Mehrkanaloptik 130 besitzt. In Fig. 8 sind exemplarisch zwei solche gemeinsamen Punkte in dem Gesamtbild 160 angedeutet, nämlich einmal mit einem kleinen x und das andere Mal mit einem o. Die diesen Punkten über die Mehrkanaloptik 130 entsprechenden Punkte in den Einzelbildern der Teilbereiche 124 sind dementsprechend auch mit einem x bzw. einem o angedeutet. Die Lage der Punkte o bzw. die Lage der Punkte x in der Bildgebungsebene 129 bilden jeweils zusammen eine Konstellation. Die Konstellation der Punkte o und die Konstellation der Punkte x unterscheiden sich voneinander, um auszugleichen, dass die Entfernung des gemeinsamen Punktes x entlang der optischen Achse des Projektionsdisplays - in Fig. 8 exemplarisch die Normalenrichtung bzw. z-Achse zur Bildgebungsebene 129 - von dem Projektionsdisplay 100 bzw. der Mehrkanaloptik 130 kleiner ist als der Abstand des gemeinsamen Punktes o. Wie später noch detaillierter erörtert werden wird, schlägt sich der von der unterschiedlichen Entfernung herrührende Unterschied in den Konstellationen vornehmlich in einer größeren Ausdehnung im Sinne einer zentrischen Streckung der Konstellation der Punkte x relativ zu der Konstellation der Punkte o nieder. Die Konstellationen können sich aber auch abhängig davon unterscheiden, in welchem Raumwinkelbereich von der Mehrkanaloptik 130 aus betrachtet, wie z.B. relativ zu der optischen Achse - hier exemplarisch z -, der jeweilige gemeinsame Punkt o bzw. x liegt, um Abbildungsfehler der Mehrkanaloptik 130 bzw. der einzelnen Projektionsoptiken 134 auszugleichen. Insbesondere können die raumwinkelbereichsweisen Unterschiede so ausgestaltet sein, dass Abbildungsfehler der Mehrkanaloptik 130 kanalindividuell ausgeglichen werden. Die genauen Zusammenhänge werden noch aus der nachfolgenden Beschreibung detaillierter hervorgehen.

Noch einmal in anderen Worten ausgedrückt sei das Projektionsdisplay von Fig. 8 anhand einer konkreten Implementierung erläutert, bei der sich exemplarisch Detailbilder aller vier Kanäle gegenseitig vollständig bzw. deckungsgleich überlappen. Wie bereits oben erwähnt, ist dies allerdings nicht unbedingt erforderlich. Eine andersartige Überlappung der Einzelbilder, um das Gesamtbild 160 zu ergeben, ist ebenfalls möglich.

Die Einzelbilder in den Teilbereichen 124 gleichen sich somit inhaltlich im Wesentlichen. Sie stellen alle eine Version des Gesamtbildes 160 dar. Gegebenenfalls sind die Einzelbilder in den Teilbereichen 124 bzw. die Teilbereiche selbst verzerrt gegenüber dem beispielsweise rechteckigen Gesamtbild 160, und zwar mit Vorverzerrung, die für alle Einzelbilder gleich sein kann. Die Vorverzerrung korrigiert beispielsweise die Verzerrung, wie sie sich durch die Divergenz des Strahlengangs der Kanaleinzelabbildungen bzw. der Vergrößerung durch die Kanaleinzelabbildungen abhängig von ihrer Brennweite und dem Abstand zu der Projektionsfläche und die dadurch resultierende Maßstabsveränderung über das Gesamtbild 160 hinweg aufgrund der Abweichung der Projektionsfläche 150 von der eigentlichen Bildebene zur Mehrkanaloptik 130, die beispielsweise im Unendlichen liegen kann, ergibt. Die Vorverzerrung ist gegebenenfalls nicht über alle Kanäle hinweg identisch. Um eine über Aberrationen erster Ordnung (Trapez) hinausgehende Verzeichnung (3. Ordnung) zu adressieren, kann es vorteilhaft sein, die Einzelbilder bzw. Teilbereiche 124 unterschiedlich vorzuverzeichnen, da unterschiedliche Dezentrierungen der jeweiligen Kanäle vorliegen. Eine Veränderung der Konstellationen über das Array für geneigte Projektionsflächen kommt dann zusätzlich hinzu, wie es nun ausgeführt wird.

Die gegenüber dem Gesamtbild 160 vorverzerrten Einzelbilder in den Teilbereichen 124 unterscheiden sich nämlich gegenseitig, um die vorerwähnten Konstellationen von einem gemeinsamen Punkt in dem Gesamtbild 160 entsprechenden Punkten in den Teilbildern 124 zu realisieren, so dass die Schärfe des Gesamtbildes 160 über die gesamte laterale Ausdehnung trotz der Tiefenvariation der Projektionsfläche 150 entlang der optischen Achse z des Projektionsdisplays 100 erhalten bleibt.

Weitere Unterschiede in den Einzelbildern in den Teilbereichen 124 können durch die im Vorhergehenden erwähnte kanalweise Korrektur von Abbildungsfehlern der Mehrkanaloptik 130 herrühren, die allerdings beispielsweise nicht von der lateralen Variation des Abstands der Projektionsfläche von dem Projektionsdisplay 100 abhängt.

Auf diese Weise kann also das Gesamtbild 160 auf die Projektionsfläche 150 so projiziert werden, dass es aus einem bestimmten Blickwinkel, wie z.B. lotrecht auf die Projektionsfläche 150, unverzerrt und scharf erscheint.

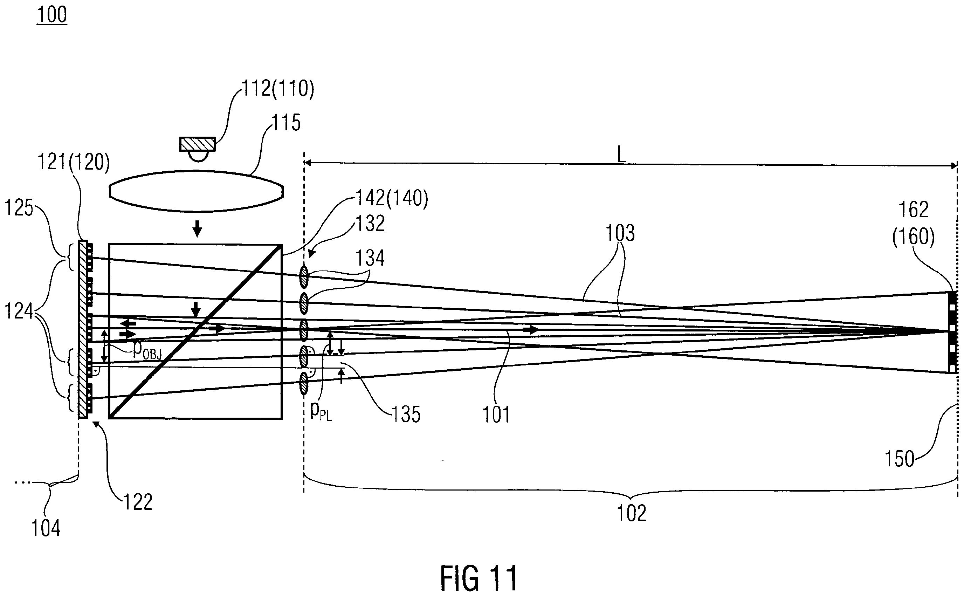

Das Projektionsdisplay 100 von Fig. 11 kann unterschiedliche Zwecke erfüllen und in unterschiedlichen Anwendungsfällen eingesetzt werden. Beispielsweise handelt es sich bei dem Projektionsdisplay von Fig. 8 um ein solches, dass dazu vorgesehen ist, ein vorbestimmtes Gesamtbild auf eine vorbestimmte Projektionsfläche 150 scharf zu projizieren, die im Bezug auf das Projektionsdisplay 100 eine konstante und fest eingestellte Lage aufweist. Beispielsweise könnte das Projektionsdisplay 100 dazu vorgesehen sein, auf eine Skulptur, deren Außenoberfläche die Projektionsfläche 150 bildet, ein Gesamtbild 160 zu projizieren, das beispielsweise eine Aufschrift oder einen sonstigen Inhalt darstellt, wobei bei dieser Form der Anwendung das Projektionsdisplay 100 dazu vorgesehen ist, in einem festen Lagebezug zu der Skulptur angeordnet zu werden und zu bleiben. In diesem Fall kann es sich beispielsweise bei dem Bildgeber 120 um eine Schattenmaske oder eine andere fein strukturierte Maske handeln, die beispielsweise von der der Mehrkanaloptik 130 gegenüberliegenden Rückseite aus beleuchtet wird, wie z.B. mittels einer Köhlerschen Beleuchtung. Die Einzelbilder könnten in den Teilbereichen 124 binär codiert, grauskaliert oder sogar farbcodiert realisiert sein, und zwar entweder in analoger bzw. kontinuierlicher oder in pixelierter Form. Insbesondere könnte es sich beispielsweise bei der Maske 120 um ein Dia handeln, oder bei den Teilbereichen 124 um einzelne Dias. Die Codierung der Bildinformation könnte insbesondere auf dem Wege einer Abbildung der Bildinformation auf eine Transmissionsskala realisiert sein. Ein Beispiel für eine Rückseitenbeleuchtung wird im Folgenden noch erläutert. Bildgeber 120 in Form einer Maske könnten allerdings aber auch reflektiv arbeiten, um in den Teilbereichen 124 statische Einzelbilder zu erzeugen.

Anstelle eines passiven bzw. statischen Bildgebers 120 kann allerdings auch ein aktiver Bildgeber, wie z.B. ein digitaler Bildgeber 120 verwendet werden. Der Bildgeber kann transmissiv oder reflektiv arbeiten. Allerdings ist es ebenfalls möglich, dass der Bildgeber 120 selbstleuchtend ist, wie z.B. ein OLED- oder LED- Display. In diesen Fällen ist es möglich, dass der Bildgeber beispielsweise, wie es im Folgenden noch erläutert wird, intern ausgebildet ist, die vorerwähnten Verarbeitungen durchzuführen, die aus eingehenden Pixelarraydaten, die das Gesamtbild 160 darstellen, die Lage und den Inhalt, nämlich die Einzelbilder der Teilbereiche 124, erst liefern, um von dem Bildgeber 120 daraufhin angezeigt zu werden, und zwar angepasst zu einer bestimmten relativen Lage der Projektionsfläche 150 zu dem Projektionsdisplay 100, wodurch aber auch insbesondere eine Anpassung an andere Projektionsflächengeometrien möglich ist, indem die Vorverarbeitungen entsprechend angepasst bzw. noch mal durchgeführt werden. Hierauf wird ebenfalls im Folgenden noch näher eingegangen werden.

Schließlich wird noch darauf hingewiesen, dass der Bildgeber 120 und die Mehrkanaloptik 130 fest zueinander gehaltert sein können, wie z.B. in einem Gehäuse verbaut sind. Insbesondere kann das Projektionsdisplay 100 beispielsweise in einem mobilen Gerät, wie z.B. einem Handy, einem PDA, einem Notebook oder einem sonstigen tragbaren Computer oder dergleichen verbaut sein.

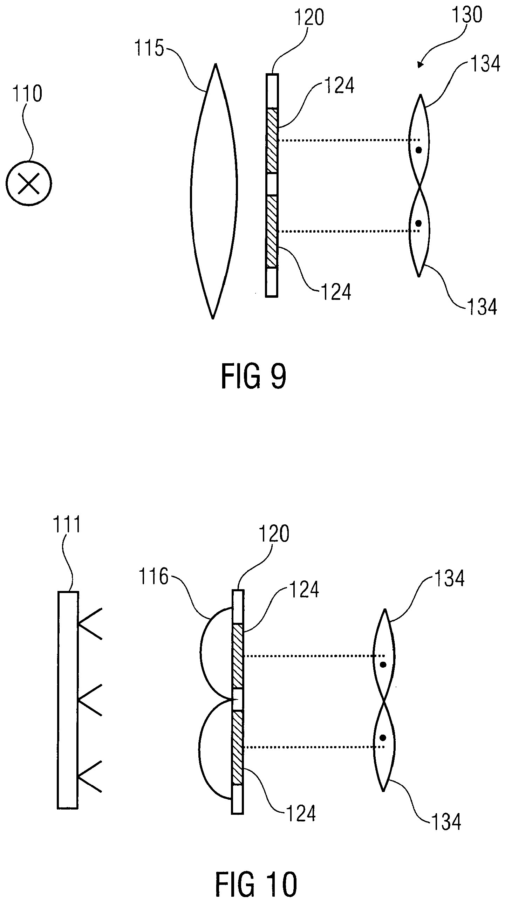

Nachdem im Vorhergehenden ein Projektionsdisplay allgemein erst einmal beschrieben wurde, soll Bezug nehmend auf Fig. 9 und 10 auf unterschiedliche Möglichkeiten eingegangen werden, wie der optische bzw. apparative Teil der Projektionsvorrichtung 100 gestaltet sein kann.

Fig. 9 zeigt eine Implementierung eines Projektionsdisplays gemäß Fig. 8, bei der der Bildgeber 120 transmissiv arbeitet bzw. die Einzelbilder in den Teilbereichen 124 dadurch darstellt, dass die Helligkeitsvariation bzw. Farbvariation in den Einzelbildern durch laterale Variation in der Transmission dargestellt bzw. codiert wird. Wie es in Fig. 9 gezeigt ist, kann zur Realisierung einer Rückseitenbeleuchtung, d.h. einer Beleuchtung von einer der Mehrkanaloptik 130 abgewandten Seite des Bildgebers 120 aus, die Projektionsvorrichtung eine Lichtquelle 110 und eine Feldlinse 115 aufweisen. Vorzugsweise wird der Abstand zwischen den Teilbildern 124 und der Feldlinse 115 klein gewählt, um eine vollständige Ausleuchtung des Bildgebers 120 zu realisieren. Vorzugsweise wird zusätzlich oder alternativ eine Köhlersche Beleuchtung der Mehrkanaloptik 134 realisiert, wonach die Feldlinse 115 die Lichtquelle 110 in die Öffnung der Pupille der Projektionsoptik 130 abbildet.

Fig. 10 zeigt, dass anstelle einer Feldlinse auch ein Feldlinsenarray 116 verwendet werden könnte, und dass zusätzlich oder alternativ anstelle einer punktförmigen Lichtquelle 110 eine flächige Lichtquelle 111 für eine Ausleuchtung rückseitig positioniert sein könnte, d.h. so, dass das Feldlinsenarray 116 bzw. die Feldlinse 115 zwischen Lichtquelle 111 und Bildgeber 120 angeordnet ist. Auch hier kann eine Köhlersche Beleuchtung realisiert werden. Bei der flächigen Lichtquelle kann es sich beispielsweise um ein Array aus LEDs mit zugeordneten Kollimationsoptiken zur Realisierung von ebenfalls sehr flach aufgebauten Beleuchtungseinheiten handeln.

Bei dem Bildgeber 120 kann es sich beispielsweise um einen reflektiven LCD-Bildgeber 120 handeln, ebenso wie es sich bei dem Bildchip nach Fig. 9 und 10 beispielsweise um transmissive LCD-Bildgeber handeln könnte.

Nachdem nun im Vorhergehenden grundsätzliche Implementierungsmöglichkeiten des Projektionsdisplays von Fig. 8 beschrieben worden sind, wird anhand der nachfolgenden Figur auf mögliche Details der optischen Anordnung eines Projektionsdisplays eingegangen. Zur Erläuterung des optischen Aufbaus wird von dem Fall ausgegangen, dass die Projektionsfläche 150 eben ist und zu der Bildgebungsebene des Bildgebers parallel verläuft. Aus diesen Ausführungen wird aber auch hervorgehen, dass der optische Aufbau des Projektionsdisplays dem Wunsch nach einer scharfen Projektion auf eine anders geformte oder gelegene Projektionsfläche dadurch entgegenkommt, dass aufgrund des mehrkanaligen optischen Aufbaus die optische Schärfentiefe ohnehin grundsätzlich vorhanden ist. Aufgrund der in der Regel sehr kurzen Brennweiten von beispielsweise wenigen Millimetern ist nämlich der Schärfentiefebereich jeden Einzelprojektors bzw. jeden Kanals im Array 132 sehr hoch im Vergleich zu einer konventionelle einkanaligen Anordnung. Dieser Umstand wird bei den in Fig. 8 bis 11 dargestellten Projektionsdisplays ausgenutzt, um die tatsächliche Schärfe der Projektion auf eine verkippte oder freiflächenformartige Projektionsfläche dadurch endgültig herzustellen, dass die Einzelbilder bzw. Teilbereiche geeignet gegenüber einer planparallelen Ausrichtung der Projektionsfläche verändert werden, was in dem Fall eines digitalen Bildgebers lediglich beispielsweise eine digitale Bildvorverarbeitung notwendig macht. Diese Maßnahme der Veränderung der Einzelbilder kann zusätzlich zu den weiter oben beschriebenen Maßnahmen ausgeführt werden, wonach unterschiedliche Gesamtaperturen der Mehrkanaloptik und somit auch unterschiedliche Schärfentiefen für unterschiedliche Richtungen innerhalb des Gesamtbilds vorgesehen sind, um einer Bildstruktur (z.B. einem oder mehreren länglichen Bildmerkmalen) zu entsprechen.

Fig. 11 zeigt eine Seitenansicht eines Projektionsdisplays 100, das ebenfalls als ein möglicher Ausgangspunkt für die Entwicklung von hierein vorgestellten Ausführungsbeispielen angesehen werden kann. Das in Fig. 11 gezeigte Projektionsdisplay 100 weist eine Lichtquelle 110, einen hier exemplarisch reflektiv ausgeführten Bildgeber 120, eine zweidimensionale Anordnung 132 von Projektionsoptiken 134 als Mehrkanaloptik 130 und einen Strahlteiler 140 auf. Hierbei ist der Bildgeber 120 ausgebildet, um in einer zweidimensionalen Verteilung 122 von Teilbereichen 124 desselben Einzelbilder darzustellen. Ferner ist die zweidimensionale Anordnung 132 von Projektionsoptiken 134 konfiguriert, um einen zugeordneten Teilbereich 125 des Bildgebers 120 entlang optischer Achsen 103 abzubilden, so dass sich Abbildungen der Einzelbilder in der Projektionsfläche 150 zu einem Gesamtbild 160 überlagern. Schließlich ist der Strahlteiler 140 in einem Strahlengang zwischen Bildgeber 120 und der zweidimensionalen Anordnung 132 von Projektionsoptiken einerseits und im Strahlengang zwischen der Lichtquelle 110 und dem Bildgeber 120 andererseits angeordnet.

Insbesondere kann bei weiteren Ausgestaltungen der Strahlteiler 140 polarisierend wirken und der reflektive Bildgeber 120 ausgebildet sein, um die Einzelbilder in Form einer Polarisationsbeeinflussung darzustellen.

Das Projektionsdisplay kann eine regelmäßige, zweidimensionale Anordnung von bildgebenden Bereichen auf dem Bildgeber 120 aufweisen, der beispielsweise als Flüssigkristall-Bildgeber 121 ausgebildet ist, einen Strahlteiler 140, der beispielsweise als polarisierender Strahlteiler 142 ausgebildet ist, und die zweidimensionale Anordnung 132 von Projektionsoptiken 134. Wie in Fig. 11 gezeigt, durchläuft Licht der Lichtquelle 110, die beispielsweise als LED 112 ausgebildet ist, zunächst eine Kondensoroptik 115 und wird dann auf den polarisierenden Strahlteiler 142 gelenkt. Von dort wird es schließlich polarisiert in Richtung des reflektiven Bildgebers 120, der beispielsweise ein LCoS(Liquid Crystal on Silicon, Flüssigkristall auf Silizium)-Bildgeber ist, reflektiert.

Je nach Grauwert des darzustellenden Bildpunktes dreht der beispielsweise digitale Bildgeber die Polarisationsrichtung des an ihm reflektierten Lichts und steuert somit die Transmission beim zweiten Durchgang durch den polarisierenden Strahlteiler. Das schnelle pixelweise Schalten der Spannungen bzw. Kristalldrehungen ermöglicht dabei die Darstellung von dynamischen Bildinhalten.

Die in Fig. 11 gezeigten Projektionsoptiken 134 können beispielsweise Mikrolinsen sein, die in einer regelmäßigen, zweidimensionalen Anordnung als Projektionsobjektive ausgebildet sind, die jeweils einen Teilbereich 125 des Bildgebers 120 auf die Projektionsfläche 150 bzw. einen Schirm abbilden. Durch die Verwendung solch einer Projektionsoptikanordnung wird es ermöglicht, die Baulänge des Gesamtsystems gegenüber herkömmlichen Einkanal-Projektoren gleicher Bildgröße drastisch zu reduzieren. Während eine geringe Baulänge des Projektionsdisplays bzw. Projektionssystems aus Brennweiten der Projektionsoptiken bzw. Linsen von beispielsweise wenigen Millimetern resultiert, wobei deren Brennweiten wiederum von den Abmaßen des Strahlteilers abhängen, sorgt eine Vervielfachung der Objektflächen bzw. lateralen Ausdehnung für eine proportionale Steigerung der Bildhelligkeit. Man erhält somit im Vergleich zu miniaturisierten Einkanal-Projektoren eine Baulänge, die die Dicke des Strahlteilers nur um wenige Millimeter überschreitet, und dies bei vergleichbarer lateraler Ausdehnung und Projektionsdistanzen.

Bei weiteren Ausgestaltungen kann das Projektionsbild durch Überlagerung, Aneinandersetzen oder Verschachteln der Abbildungen von Einzelkanälen der Anordnung entstehen.

Bei weiteren Ausgestaltungen weisen die Projektionsoptiken 134, wie in Fig. 11 beispielhaft gezeigt, eine Dezentrierung 135 bezüglich der zugeordneten Teilbereiche 124 auf.

Im allgemeinen kann die Dezentrierung als zentrale Stauchung oder Streckung bezüglich einer zentralen optischen Achse 101 bzw. als lateraler Versatz der Projektionsoptiken 134 bezüglich der zugeordneten Teilbereiche 124 des Bildgebers 120 aufgefasst werden. Die Dezentrierung der Projektionsoptiken bezüglich der zugeordneten Einzelbilder auf den Bildgeber ist entscheidend für die Projektionsdistanz bzw. den Projektionsabstand. Aufgrund einer großen Tiefenschärfe der Teilbilder hängt die Schärfe an der Projektionsdistanz bzw. dem Projektionsabstand nur eingeschränkt von der schirmseitigen Fokussierung der einzelnen Projektionsoptiken ab. Objektseitig kann, wie bereits erwähnt, die Fokussierung der Projektionsoptiken 134 beispielsweise relativ zur kurzen Brennweite der Projektionsoptiken genau so eingestellt worden sein, dass sich die Bildgebungsebene 129 in der Brennweite der Projektionsoptik 130 befindet. Das ist aber nicht zwingend. Für virtuelle Bilder oder sehr nahe Projektionsabstände kann, wie ebenfalls erwähnt, die Bildgebungsebene 129 kurz davor oder dahinter befindet. Ja nach dem liegt dann die schirmseitige Fokussierung beispielsweise im Unendlichen usw., aber der Schärfentiefenbereich der einzelnen Kanäle ist aufgrund der relativ kurzen Brennweiten groß. Es ist dieser Umstand, der gemäß Fig. 8 und auch der nachfolgenden Beschreibung ausgenutzt wird, wenn die Bild- bzw. Projektionsfläche 150 eben nicht planparallel zu der Bildgebungsebene 129 verläuft, sondern aus dieser heraus verkippt oder anders geartet gemäß einer Freiformfläche variiert.

Durch einen leicht verringerten Mittenabstand (Pitch) der Projektionsoptiken bzw. Projektionslinsen gegenüber den bildgebenden Strukturen entsteht ein von der zentralen optischen Achse 101 der zweidimensionalen Anordnung 132 von Projektionsoptiken 134 bzw. vom Array-Zentrum (Rasterzentrum) nach außen wachsender Versatz 135 der jeweiligen bildgebenden Struktur und der entsprechenden Projektionsoptik. Die so entstehende leichte Verkippung der optischen Achsen 103 äußerer Projektionsoptiken 134 bzw. Projektoren gegenüber der zentralen optischen Achse 101 bzw. des Zentralkanals sorgt für eine Überlagerung (Superposition) von Einzelabbildungen in der Bildebene bzw. Projektionsfläche 150 zu dem Gesamtbild 160. Die Bildebene bzw. Projektionsfläche kann hierbei im Unendlichen liegen oder sich in einem endlichen Abstand von der Projektionsoptik vor dem Bildgeber oder hinter dem Bildgeber befinden. Wie in Fig. 8 gezeigt, ist der Bereich vor dem Bildgeber durch den Bereich 102 rechts von bzw. im Strahlengang nach der zweidimensionalen Anordnung 132 von Projektionsoptiken 134 definiert, während der Bereich hinter dem Bildgeber durch den Bereich 104 links von dem Bildgeber 120 bzw. auf der dem Strahlteiler 140 abgewandten Seite des Bildgebers 120 definiert ist. Die einzelnen Abbildungen können sich beispielsweise auf einem Schirm zu dem Gesamtbild überlagern.

Hierbei sind keine weiteren makroskopischen, optischen Elemente zur Projektion im Strahlengang erforderlich. Die Projektionsdistanz bzw. Projektionsentfernung L des Array-Projektionsdisplays (d. h. der mittlere Abstand L der Projektionsfläche 150 von der zweidimensionalen Anordnung 132 von Projektionsoptiken 134 senkrecht zu ihr), die im Fall einer nicht planparallelen Projektionsfläche 150 beispielsweise eine mittlere Projektionsdistanz ist, ergibt sich aus der Brennweite der Projektionsoptik f, dem Mittenabstand der Projektionsoptiken $p_{PL}$ und dem Mittenabstand der Bilder $p_{OBJ}$. Die Vergrößerung M der Abbildungen folgt aus dem Verhältnis der Projektionsentfernung L zur Brennweite der Projektionslinse f. Hierbei gelten die folgenden Beziehungen:

$$L = \frac{f \cdot p_{PL}}{p_{OBJ} - p_{PL}} \qquad\qquad M = \frac{L}{f} = \frac{p_{PL}}{p_{OBJ} - p_{PL}}.$$

Das Verhältnis der Mittenabstände von Objektstrukturen zu Projektionsoptiken bzw. deren Differenz steuert somit die Projektionsentfernung. Dabei ist zu beachten, dass in dem Fall einer nicht planparallelen Projektionsfläche 150 der Mittenabstand der Teilbereiche 124 $p_{OBJ}$ beispielsweise der Mittelwert aller einander korrespondierender Punkte in den Einzelbildern darstellt, oder einen Mittelwert der Abstände der Flächenschwerpunkte der Teilbereiche 124, die beispielsweise verzerrt sein können, und zwar einerseits zum Ausgleich der optischen Verzerrung, wie sie im Vorhergehenden Bezug nehmend auf Fig. 8 beschrieben worden ist, und andererseits zur lokalen Schärfennachregelung andererseits.

Ist der Mittenabstand der Projektionsoptiken kleiner als der der bildgebenden Strukturen, entsteht ein reelles Bild in einem definierten Abstand. In dem in Fig. 8 gezeigten Fall ist der Mittenabstand $p_{PL}$ der Projektionsoptiken 134 kleiner als der Mittenabstand $p_{OBJ}$ der zugeordneten Teilbereiche 124. Daher ist bei der Konfiguration in Fig. 8 ein sich in der Projektionsfläche 150 überlagerndes Gesamtbild 162 reell. Dieses Beispiel wurde auch Fig. 11 zugrunde gelegt.

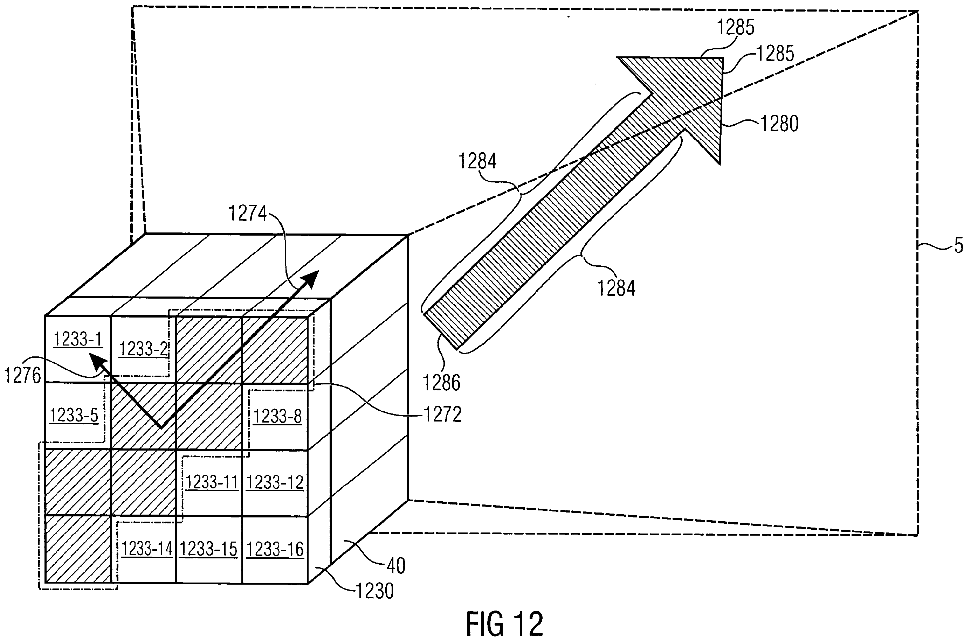

Fig. 12 zeigt eine schematische Darstellung eines Projektionssystems und eines von dem Projektionssystem projizierten Gesamtbilds 5. Das Projektionssystems umfasst eine Mehrkanaloptik 40, die mehrere optische Kanäle (hier: 16 optische Kanäle in 4x4 Anordnung) umfasst und eine zumindest temporäre anisotrope Gesamtapertur mit einer Hauptaperturachse 1274 und einer dazu orthogonalen Nebenaperturachse 1276 aufweist. Die temporäre anisotrope Gesamtapertur ist in Fig. 12 durch einen strichpunktiert gezeichneten Rahmen 1272 angedeutet. Das Projektionssystem umfasst weiterhin ein Mehrzahl von Bildgebern 1230, die jeweils einem der optischen Kanäle zugeordnet sind und konfiguriert sind, jeweils ein Teilbild darzustellen, das mittels des zugeordneten optischen Kanals projiziert wird, wobei sich die projizierten Teilbilder zu dem projizierten Gesamtbild 5 kombinieren. Die Mehrzahl von Bildgebern umfasst im dargestellten Beispiel 16 Bildgeber 1233-1 bis 1233-16. Das projizierte Gesamtbild 5 weist eine überwiegende Kantenrichtung auf, die in Fig. 12 durch einen Pfeil 1280 veranschaulicht ist. Der Pfeil 1280 stellt auch den Bildinhalt des projizierten Gesamtbilds 5 dar. Man erkennt in diesem veranschaulichenden Beispiel, dass die Kanten 1284 des Pfeils 180 sich in derselben Richtung erstrecken, wie die überwiegende Kantenrichtung. In der Regel wird man anstreben, dass die relativ langen Kanten 1284 möglichst scharf abgebildet werden, wohingegen man bei den kürzeren Kanten 1285 und 1286 bereit ist, eine gewisse Unschärfe in Kauf zu nehmen. Um dies zu erreichen, wird die temporäre anisotrope Gesamtapertur 1272 so ausgerichtet, dass die Hauptaperturachse 1274 einen kleineren Winkel mit der überwiegenden Kantenrichtung 1280 einschließt, als die Nebenaperturachse 1276. Die temporäre anisotrope Gesamtapertur wird durch Deaktivieren mehrerer Bildgeber in der linken oberen Ecke sowie in der rechten unteren Ecke der 4x4 Anordnung der Bildgeber 1230 erzielt.

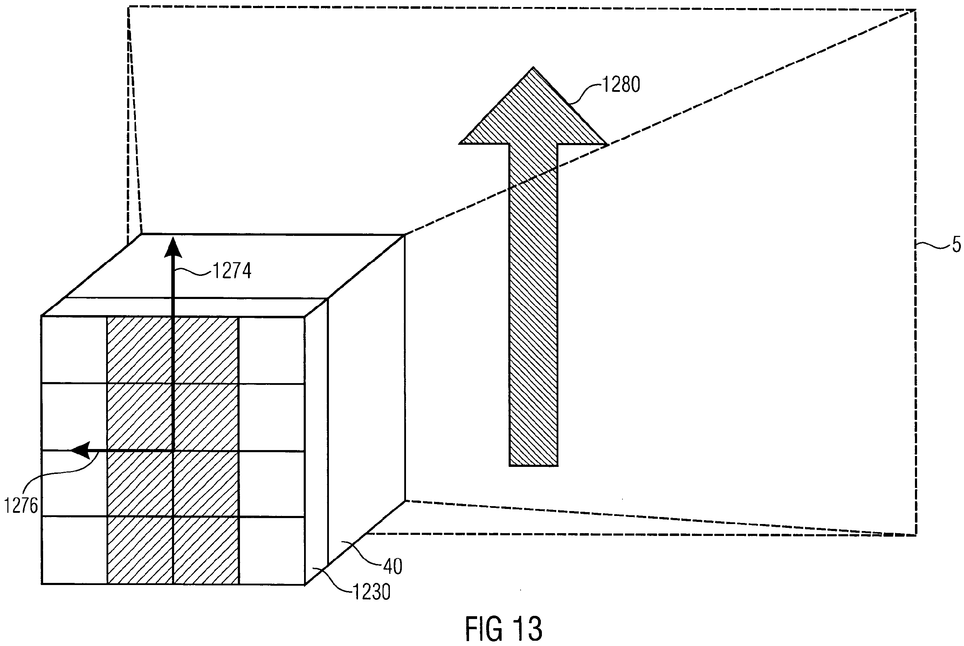

Fig. 13 zeigt eine schematische Darstellung des Projektionssystems von Fig. 12, das ein Gesamtbild 5 mit einem anderen Bildinhalt projiziert, dessen überwiegende Kantenrichtung (veranschaulicht durch den Pfeil 1280) nun nach oben zeigt. Dementsprechend zeigt die Hauptaperturachse 1274 nun nach oben. Von den 16 Bildgebern und optischen Kanälen werden die acht Bildgeber der zweiten und dritten Spalte der 4x4 Anordnung verwendet. Die Bildgeber der linken Spalte und der rechten Spalte sind deaktiviert. Alternativ könnten z.B. auch die erste und zweite Spalte oder die dritte und vierte Spalte verwendet werden.

Die überwiegende Kantenrichtung ist in der Regel 180 Grad rotationssymmetrisch, sodass in Fig. 13 die überwiegende Kantenrichtung auch nach unten zeigen könnte. Auch die anisotrope Gesamtapertur ist in der Regel 180 Grad rotationssymmetrisch.

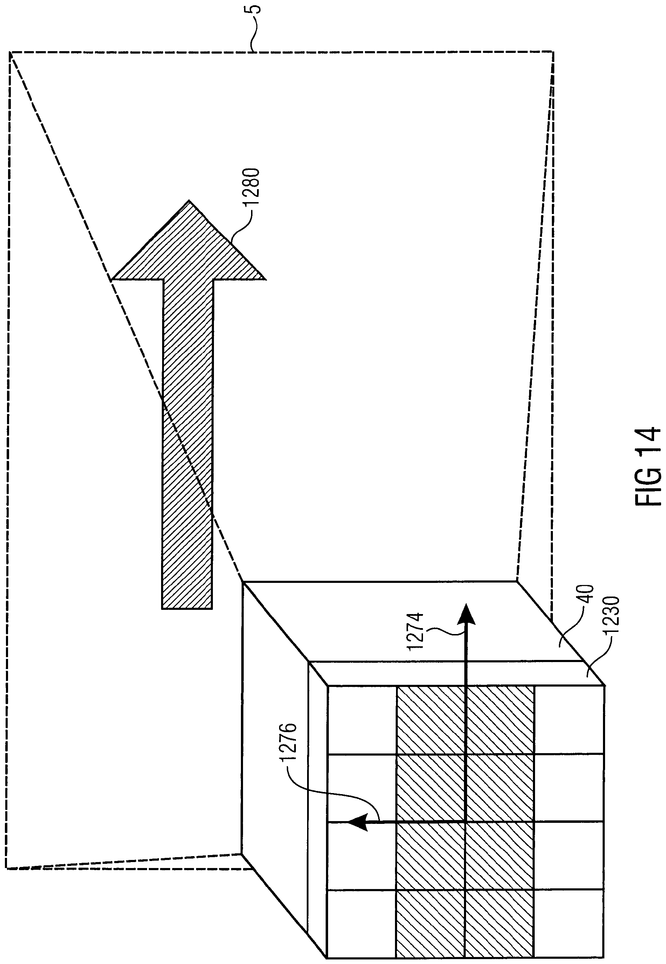

Fig. 14 zeigt noch eine weitere Situation, in der die überwiegende Kantenrichtung des projizierten Gesamtbilds nach rechts zeigt. Dementsprechend ist die temporäre anisotrope Gesamtapertur ebenfalls so gewählt, dass ihre Hauptaperturachse 1274 nach rechts zeigt, was durch die Verwendung der zwei mittleren Zeilen der 4x4 Anordnung der Bildgeber sowie der zugeordneten optischen Kanäle erzielt wird. Alternativ könnten auch die erste und zweite Zeile oder die dritte und vierte Zeile verwendet werden.

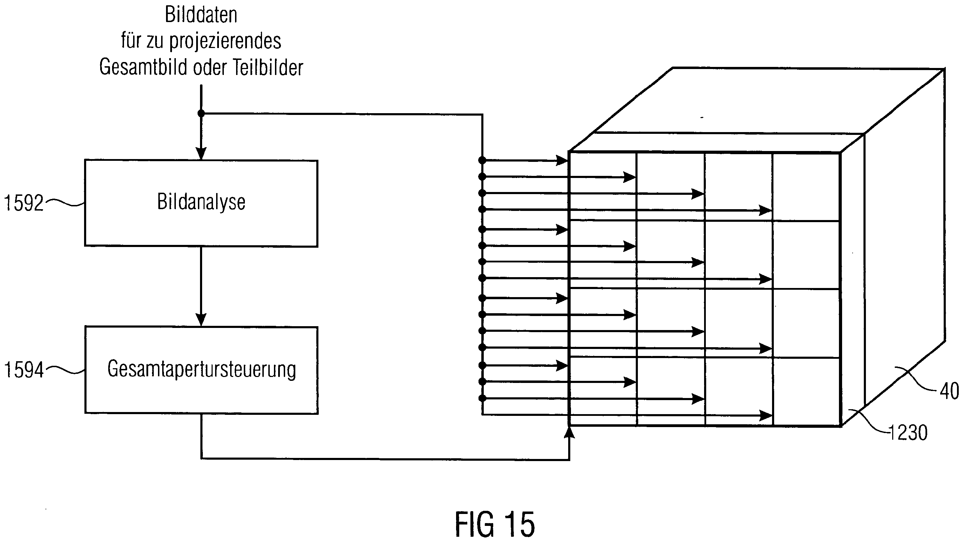

Fig. 15 zeigt ein schematische Blockschaltbild eines Projektionssystems mit einer Mehrkanaloptik 40, einer Mehrzahl von Bildgebern 1230, einer Bildanalyseeinrichtung 1592 und einer Gesamtapertursteuerung 1594. Die Bildanalyseeinrichtung 1592 ist konfiguriert, die überwiegende Kantenrichtung des projizierten Gesamtbilds aus Bilddaten der Teilbilder oder aus den Bilddaten des zu projizierenden Gesamtbilds zu bestimmen oder zu schätzen. Die Gesamtapertursteuerung 1594 ist konfiguriert, die Gesamtapertur der Mehrkanaloptik 40 an der überwiegenden Kantenrichtung auszurichten. Die Bildanalyseeinrichtung 1594 übermittelt die überwiegende Kantenrichtung an die Gesamtapertursteuerung 1594, welche daraufhin eine Teilmenge der Mehrzahl von Bildgebern 1230 auswählt, die für die Projektion des Gesamtbilds 5 verwendet werden.

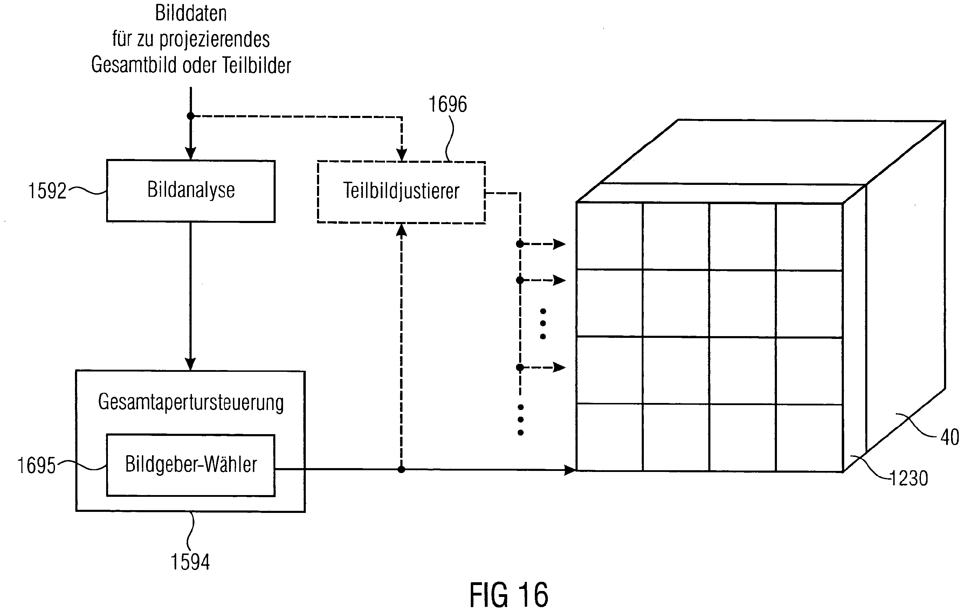

Fig. 16 zeigt ein schematisches Blockschaltbild, das ein Projektionssystem gemäß einem weiteren Ausführungsbeispiel zeigt. Zusätzlich zu den in Fig. 15 gezeigten Elementen umfasst das Projektionssystem in Fig. 16 noch einen Bildgeberwähler 1695 als Teil der Gesamtapertursteuerung 1594. Der Bildgeberwähler 1695 ist konfiguriert, eine Teilmenge der Bildgeber 1233-1 bis 1233-16 anhand der überwiegenden Kantenrichtung auszuwählen, wobei die Teilmenge der Bildgeber länglich ist und eine Längsachse der Teilmenge der Bildgeber einen Winkel mit der überwiegenden Kantenrichtung aufweist, der kleiner als 30 Grad ist. In weiteren Ausführungsbeispielen ist dieser Winkel kleiner als 45 Grad (bzw. zwischen 0 Grad und 45 Grad), kleiner als 35 Grad, kleiner als 25 Grad, kleiner als 20 Grad, kleiner als 15 Grad, kleiner als 10 Grad, oder kleiner als 5 Grad. Die Längsachse der Teilmenge der Bildgeber entspricht in der Regel der Hauptaperturachse 1274. Die Längsachse kann z.B. mittels einer einhüllenden oder umschreibenden Ellipse ermittelt werden, welche die Teilmenge umschreibt.

Das Projektionssystem in Fig. 16 kann weiterhin einen optionalen Teilbildjustierer 1696 umfassen, der konfiguriert ist, die Teilbilder zu justieren hinsichtlich zumindest eines von Intensität, Position bezogen auf den entsprechenden Bildgeber und Lage bezogen auf den entsprechenden Bildgeber. Auf diese Weise werden eventuelle Änderungen im Abbildungsverhalten des Projektionssystems, welche durch Auswahl der Teilbildmenge verursacht werden, wie zum Beispiel herabgesetzte Helligkeit, Intensität, so weit möglich ausgeglichen. Allgemein kann das Projektionssystem derart dimensioniert sein, dass es ausreicht, wenn nur ein Teil der vorhandenen optischen Kanäle verwendet wird, während die verbleibenden optischen Kanäle deaktiviert sind. Ein entsprechender Anteil (Mindestanzahl der aktiven Bildgeber / Gesamtanzahl der Bildgeber) kann beispielsweise 50%, 60%, 70%, 80% oder 90% betragen.

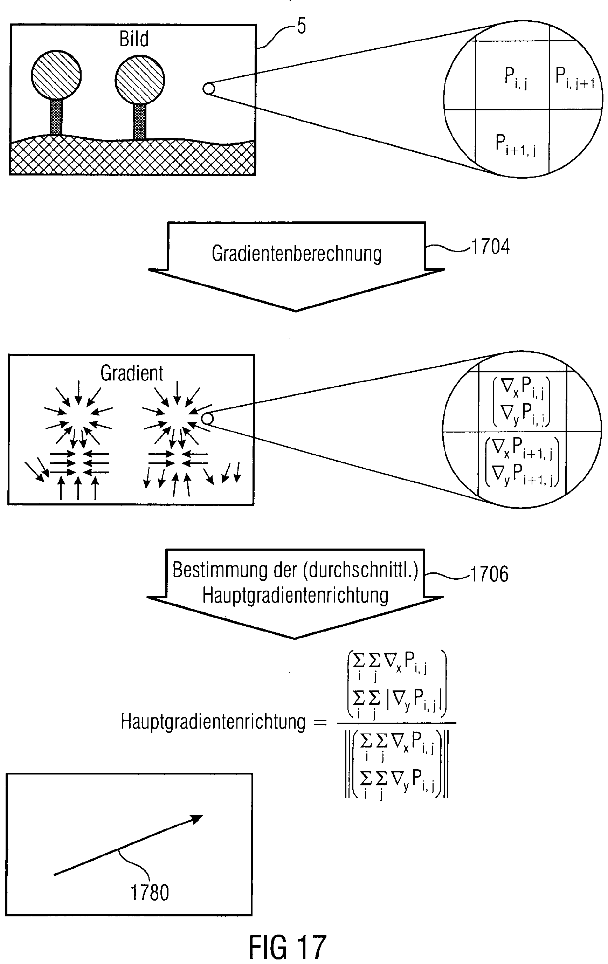

Fig. 17 veranschaulicht die Bestimmung der überwiegenden Kantenrichtung bzw. der überwiegenden Intensitätsgradientenrichtung des Gesamtbilds 5. Es wird angenommen, dass das Gesamtbild 5 durch Pixel $p_{i,j}$ beschrieben wird, die eine Grauwertinformation oder eine Farbinformation oder mehrere Farbkanalinformationen enthalten. Dabei ist $i$ der Zeilenindex und $j$ der Spaltenindex. Für jedes Pixel $p_{i,j}$ kann ein lokaler Gradient $\nabla_{pi,j}$ berechnet werden (Bezugszeichen 1704), der eine Richtung und einen Betrag angibt. Der lokale Gradient kann auch in kartesischen Koordinaten ausgedrückt werden als $\nabla_x p_{i,j}$ und $\nabla_y p_{i,j}$. Eine durchschnittliche Hauptgradientenrichtung des Bilds 5 kann mittels der folgenden Formel berechnet werden:

$$g = \frac{\left(\begin{array}{c}\sum_i \sum_j \nabla_x p_{i,j} \\ \sum_i \sum_j \left|\nabla_y p_{i,j}\right|\end{array}\right)}{\left\|\left(\begin{array}{c}\sum_i \sum_j \nabla_x p_{i,j} \\ \sum_i \sum_j \nabla_y p_{i,j}\end{array}\right)\right\|}$$

wobei

$p$ Bildinhalt des projizierten Gesamtbilds,

$p_{i,j}$ Pixelwert des projizierten Gesamtbilds an der Stelle $i,j$,

$\nabla_x p_{i,j}$ x-Komponente des Gradienten von $p$ an der Stelle $i,j$,

$\nabla_y p_{i,j}$ y-Komponente des Gradienten von $p$ an der Stelle $i,j$.

Aufgrund der 180-Grad-Rotationssymmetry reicht es aus, den Betrag der y-Komponente des lokalen Gradienten zu berücksichtigen. Im Zähler des Bruchs werden die lokalen Gradienten komponentenweise über das gesamte Bild 5 aufaddiert. Der Nenner normiert die Hauptgradientenrichtung anhand des Betrags des Vektors im Zähler, der durch das Aufsummieren erhalten wird. Unter Umständen kann auf das Normieren verzichtet werden. Weiterhin ist es möglich, den geometrischen Durchschnitt zu bilden durch Quadrieren der Gradientenkomponenten vor dem Aufsummieren, also z.B. $\sum_i \sum_j \left(\nabla_x p_{i,j}\right)^2$ . Es ist auch denkbar, die x-Komponente stärker zu gewichten als die y-Komponente, oder anders herum. Die Berechnung kann auch anhand von Polarkoordinaten vorgenommen werden, wobei in diesem Fall unterschiedliche Gradientenrichtungen unterschiedlich gewichtet werden können. Die Hauptgradientenrichtung 1780 ist in Fig. 17 unten symbolhaft als ein von links unten nach rechts oben gerichteter Pfeil dargestellt. Man beachte, dass die Hauptgradientenrichtung bzw. überwiegende Gradientenrichtung 1780 in der Regel genau oder zumindest annähernd orthogonal zu der überwiegenden Kantenrichtung des Bilds 5 ist.

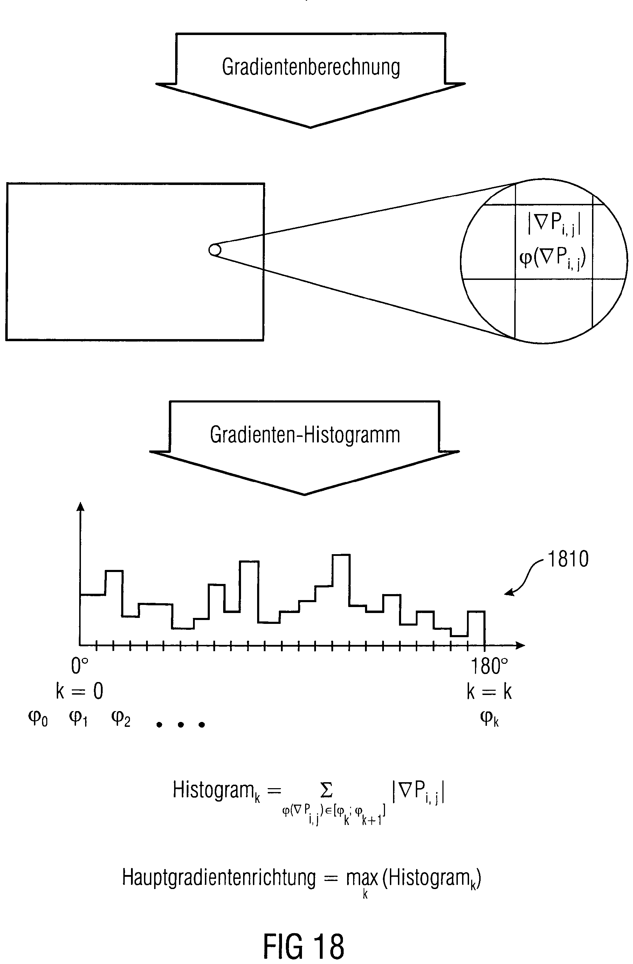

Fig. 18 veranschaulicht schematisch die Bestimmung der Hauptgradientenrichtung bzw. der überwiegenden (Intensitäts-)gradientenrichtung mittels einer Histogrammauswertung. Wie in Fig. 17 werden zunächst die lokalen Gradienten innerhalb des Bilds 5 berechnet. Alternativ ist auch denkbar, dass die lokalen Gradienten lediglich in einem Bildausschnitt, in mehreren Bildausschnitten oder stichprobenartig berechnet werden. Die lokalen Gradienten werden hier aufgrund der geplanten Weiterverarbeitung in Polarkoordinaten ausgedrückt, wobei $|\nabla p_{i,j}|$ den Betrag und $\varphi(\nabla p_{i,j})$ den Winkel des Gradienten an der Stelle $i,j$ ausdrückt. Die Gesamtheit der ausgewerteten lokalen Gradienten kann in Form eines Gradientenhistogramms 1810 dargestellt werden, das ausdrückt, wie viele der ausgewerteten lokalen Gradienten eine bestimmte Richtung aufweisen, bzw. innerhalb eines bestimmten Richtungssektors sind. Aufgrund der 180-Grad-Rotationssymmetry reicht es aus, wenn der Winkelbereich von 0 Grad bis 180 Grad berücksichtigt wird. Dieser Winkelbereich kann nun in eine Mehrzahl von Winkelintervallen aufgeteilt werden, z.B. in K=18 Winkelintervalle à 10 Grad. Der Index k läuft von 0 bis K-1 und das k-te Winkelintervall beinhaltet somit die Richtungen von $\varphi_k$ = k*10 Grad bis $\varphi_{k+1}$ = (k+1)*10 Grad. Der Betrag der lokalen Gradienten kann ebenfalls berücksichtigt werden:

$$Histogramm_k = \sum_{\varphi(\nabla p_{i,j}) \in [\varphi_k ; \varphi_{k+1}]} \left|\nabla p_{i,j}\right| .$$

Die Hauptgradientenrichtung kann dann als das Maximum innerhalb der Histogrammwerte bestimmt werden. Die überwiegende Kantenrichtung kann als die dazu orthogonale Richtung angenommen werden. Innerhalb der Summe kann der Betrag des lokalen Gradienten durch eine Gewichtungsfunktion gewichtet werden, beispielsweise durch eine Quadrieren des Betrags des lokalen Gradienten, so dass hohe Gradientenbeträge (d.h. abruptere Hell-Dunkel-Übergänge oder Farbübergänge) im Verhältnis noch stärker berücksichtigt werden als allmähliche Hell-Dunkel- oder Farbübergänge.

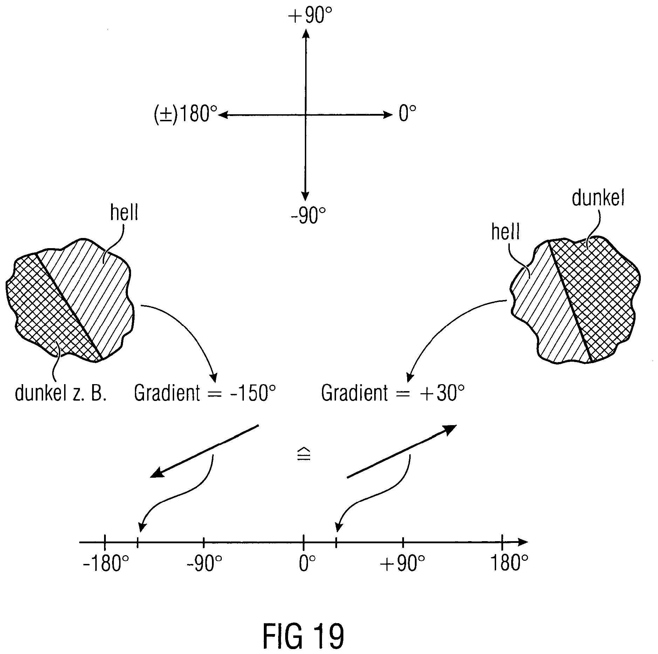

Fig. 19 veranschaulicht schematisch die 180-Grad-Rotationssymmetry. Es wird angenommen, dass ein erstes Gesamtbild 5 eine Hell-Dunkel-Kante aufweist (in Fig. 19 links dargestellt), die mit einen Winkel von ca. -60 Grad verläuft, wobei der dunkle Bildbereich links unterhalb von der Kante ist und der helle Bildbereich rechts oberhalb der Kante. Ein zweites Gesamtbild 5 weist eine Hell-Dunkel-Kante auf, die ebenfalls mit einem Winkel von ca. -60 Grad verläuft, wobei der dunkle Bildbereich nun allerdings rechts oberhalb der Kante liegt und der helle Bildbereich links unterhalb. Im ersten Fall (links in Fig. 19) hat der Gradient von Hell nach Dunkel eine Richtung von -150 Grad. Im zweiten Fall (rechts in Fig. 19) hat der Gradient eine Richtung von +30 Grad. Für die Zwecke der Ausrichtung der Hauptaperturachse sind beide Gradientenrichtungen im Wesentlichen gleichbedeutend. Es reicht also aus, beispielsweise den Winkelbereich von 0 Grad bis 180 Grad zu betrachten.

Denkbare Anwendungen für obige Ausführungsbeispiele liegen im Bereich der persönlichen Kommunikations- und Unterhaltungselektronik und der Datenvisualisierung im Heim und mobilen Bereich. Ein weiteres Anwendungsgebiet liegt im Automobil- und Flugzeugbereich in Form eines "Head-up-Displays" zur projizierenden Darstellung von Fahrzustandsinformationen, Navigation, Umgebungsinformationen als Fahrerassistenzsysteme bzw. zur Unterhaltung von Mitfahrern. Ebenso denkbar sind Anwendungen in der Mess- und Medizintechnik sowie bei Displayanwendungen in Industrie- und Fertigungsanlagen. Eine Verwendung obiger Projektionsdisplays als Beleuchtungseinheit, Front-Scheinwerfer, Effektbeleuchtung, wie z.B. für Automobile, ist ebenfalls denkbar.

Weitere Anwendungsmöglichkeiten bestehen in der Realisierung von Projektions- und Beleuchtungssystemen auf geneigten und optional gekrümmten Flächen für 3D-Vermessung, Machine Vision, Automotive, Architektur, Heimbereich-Infotainment (z.B. häuslicher Kommunikationsbereich - Küchenprojektionen), Illumination sowie ophtalmologische und allgemeinmedizinische Anwendungen (z.B. Ausleuchten der gekrümmten Netzhaut).

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Projektionsdisplay mit

   einem Bildgeber (30), der ausgebildet ist, um in einer Verteilung von Teilbereichen (33-1 bis 33-7) einer Bildgebungsebene des Bildgebers (30) Einzelbilder zu erzeugen, wobei sich die Einzelbilder in den Teilbereichen inhaltlich gleichen, und
   einer Mehrkanaloptik (40), die mehrere optische Kanäle (44-1 bis 44-7) umfasst, und die konfiguriert ist, um pro Kanal (44-1 bis 44-7) jeweils einen zugeordneten Teilbereich (33-1 bis 33-7) des Bildgebers (30) in eine Projektionsfläche abzubilden, sodass sich die Abbildungen der Einzelbilder in der Projektionsfläche zu einem Gesamtbild (5) zusammenfügen,
   **dadurch gekennzeichnet, dass**
   die Teilbereiche (33-1 bis 33-7) des Bildgebers (30) sowie die optischen Kanäle (44-1 bis 44-7) der Mehrkanaloptik (40) jeweils in einer länglichen Anordnung angeordnet sind, sodass die Mehrkanaloptik (40) eine anisotrope künstliche Gesamtapertur aufweist,
   wobei die längliche Anordnung der Teilbereiche (33-1 bis 33-7) ähnlich wie zumindest ein längliches Bildmerkmal des Gesamtbilds ausgerichtet ist,
   sodass die künstliche Gesamtapertur der Mehrkanaloptik (40) in einer Richtung entlang des zumindest einen länglichen Bildmerkmals größer ist als orthogonal dazu.

2. Projektionsdisplay gemäß Anspruch 1, wobei die Kanäle (44-1 bis 44-7) der Mehrkanaloptik (40) eine zweidimensionale Anordnung bilden, die entlang des länglichen Bildmerkmals mehr Kanäle aufweist als orthogonal dazu.

3. Projektionsdisplay gemäß Anspruch 2, wobei die zweidimensionale Anordnung der besagten Kanäle (44-1 bis 44-7) der Mehrkanaloptik (40) einen zusammenhängenden Bereich bildet.

4. Projektionsdisplay gemäß einem der Ansprüche 1 bis 3, wobei die längliche Anordnung der Kanäle (44-1 bis 44-7) der Mehrkanaloptik (40) einen Winkel zwischen 80 Grad und 100 Grad mit einer überwiegenden Intensitätsgradientenrichtung des Gesamtbildes (5) einschließt.

5. Projektionsdisplay gemäß einem der Ansprüche 1 bis 4, wobei der Bildgeber (30) ein statischer Bildgeber ist und das Gesamtbild (5) vorbestimmt ist.

6. Projektionsdisplay gemäß einem der Ansprüche 1 bis 4, wobei der Bildgeber (30) ein dynamischer Bildgeber ist und eine Vorzugsrichtung des zumindest einen Bildmerkmals des Gesamtbilds (5) innerhalb eines Toleranzbereichs vorbekannt ist oder ermittelt wurde.

7. Projektionsdisplay gemäß einem der Ansprüche 1 bis 6, wobei die Mehrkanaloptik (40) konfiguriert ist, die Abbildungen der Einzelbilder teilweise oder komplett zu überlagern.

8. Projektionsdisplay gemäß einem der Ansprüche 1 bis 7, wobei die Kanäle (44-1 bis 44-7) der Mehrkanaloptik (40) eine zweidimensionale Anordnung bilden, die einen oder mehrere Bereiche mit entsprechenden Einhüllenden der Kanäle (44-1 bis 44-7) aufweisen, wobei der Bereich oder die zusammenhängenden Bereiche dem zumindest einen länglichen Bildmerkmal hinsichtlich der Ausrichtung ähneln.

9. Projektionsdisplay gemäß einem der Ansprüche 1 bis 8, wobei die Kanäle (44-1 bis 44-7) der Mehrkanaloptik (40) eine im Vergleich zu der gesamten Mehrkanaloptik (40) kleine Subapertur und eine hohe Schärfentiefe aufweisen, so dass die Abbildung der Einzelbilder einzeln betrachtet über einen vergleichsweise großen Bereich eines Abstands zwischen der Mehrkanaloptik (40) und der Projektionsfläche scharf sind.

10. Projektionsdisplay gemäß einem der Ansprüche 1 bis 9, wobei zumindest einige der Kanäle (44-1 bis 44-7) der Mehrkanaloptik (40) in einer symbolähnlichen Subapertur-Anordnung angeordnet sind, um für variierende Projektionsabstände ein symbolhaftes Unschärfeverhalten zu erzielen, das der symbolähnlichen Subapertur-Anordnung entspricht.

11. Projektionsdisplay gemäß einem der Ansprüche 1 bis 10, wobei die Mehrkanaloptik (40) eine eindimensionale Kanalanordnung, eine konzentrische Kanalanordnung, eine quadratische Kanalanordnung, eine hexagonale Kanalanordnung oder eine stochastische Kanalanordnung aufweist.

12. Projektionsdisplay gemäß einem der Ansprüche 1 bis 11, wobei die Mehrkanaloptik
weitere Kanäle umfasst, die in einer zweiten länglichen Anordnung angeordnet sind, die eine unterschiedliche Ausrichtung von der ersten länglichen Anordnung hat, und wobei das Projektionsdisplay weiterhin ein Steuerung umfasst, die in Abhängigkeit einer überwiegenden Bildmerkmalsrichtung in dem Gesamtbild die erste längliche Anordnung oder die zweite längliche Anordnung oder sowohl die erste längliche Anordnung als auch die zweite längliche Anordnung für die Projektion des Gesamtmusters aktiviert, indem den jeweiligen aktivierten Kanälen zugeordnete Teilbereiche des Bildgebers (30) aktiviert werden.

13. Projektionsdisplay gemäß Anspruch 12, weiter umfassend eine Mehrzahl von individuell steuerbaren Lichtquellen, wobei jede Lichtquelle einem Kanal der Mehrkanaloptik und dem zugeordneten Teilbereich des Bildgebers (30) zugeordnet ist, und wobei das Aktivieren der Teilbereiche des Bildgebers (30) ein Aktivieren der zugeordneten Lichtquellen umfasst oder dadurch erfolgt.

14. Verfahren zum Projizieren eines Gesamtbilds (5), wobei das Verfahren die folgenden Schritte aufweist:

Erzeugen von Einzelbildern in einer Verteilung von Teilbereichen (33-1 bis 33-7) einer Bildgebungsebene eines Bildgebers (30), wobei sich die Einzelbilder in den Teilbereichen inhaltlich gleichen, und
Abbilden, durch jeweils einen von mehreren optischen Kanälen (44-1 bis 44-7) einer Mehrkanaloptik (40), jeweils eines zugeordneten Teilbereichs (33-1 bis 33-7) der Bildgebungsebene in eine Projektionsfläche, sodass sich die Abbildungen der Einzelbilder in der Projektionsfläche zu einem Gesamtbild (5) zusammenfügen,
**dadurch gekennzeichnet, dass**
die Teilbereiche (33-1 bis 33-7) des Bildgebers (30) sowie die optischen Kanäle (44-1 bis 44-7) der Mehrkanaloptik (40) jeweils in einer länglichen Anordnung angeordnet sind, sodass die Mehrkanaloptik (40) eine anisotrope künstliche Gesamtapertur aufweist,
wobei die längliche Anordnung der Teilbereiche ähnlich wie zumindest ein längliches Bildmerkmal des Gesamtbilds (5) ausgerichtet ist, so dass die künstliche Gesamtapertur der Mehrkanaloptik (40) in einer Richtung entlang des zumindest einen länglichen Bildmerkmals größer ist als orthogonal dazu.

15. Verfahren gemäß Anspruch 14, wobei das Erzeugen der Einzelbilder in Abhängigkeit von einem kleinsten Abstand und einem größtem Abstand zwischen der Mehrkanaloptik (40) und der Projektionsfläche erfolgt.

16. Verfahren gemäß Anspruch 14 oder 15, wobei das Abbilden der jeweils zugeordneten Teilbereiche (33-1 bis 33-7) umfasst:

Empfangen des Gesamtbilds (5) zur Projektion mittels eines dynamischen Bildgebers (30);
Bestimmen von Teilbilddaten des Gesamtbilds (5), die den Teilbereichen (33-1 bis 33-7) der Bildgebungsebene zugeordnet sind;
Erkennen und Lokalisieren des zumindest einen länglichen Bildmerkmals des Gesamtbilds (5);
Ermitteln einer Teilmenge der Kanäle der Mehrkanaloptik (40), die eine längliche Anordnung bilden, deren Ausrichtung der Ausrichtung des zumindest einen länglichen Bildmerkmals im Wesentlichen entspricht;
Laden der Teilbilddaten in den dynamischen Bildgeber (30);
Aktivieren der Teilbereiche des Bildgebers, die den Kanälen der Teilmenge zugeordnet sind.

**17.** Computerprogramm mit einem Programmcode zur Durchführung des Verfahrens nach einem der Ansprüche 14 bis 16 unter Verwendung eines Projektionsdisplays nach einem der Ansprüche 1 bis 13, wenn das Computerprogramm auf einem Computer abläuft.

**18.** Projektionssystem mit

einer Mehrkanaloptik (40), die mehrere optische Kanäle (44-1 bis 44-7) umfasst, und
einer Mehrzahl von Bildgebern (1233-1 bis 1233-16), die jeweils einem der optischen Kanäle (44-1 bis 44-7) zugeordnet sind und konfiguriert sind, um jeweils ein Einzelbild darzustellen, das mittels des zugeordneten optischen Kanals (44-1 bis 44-7) in eine Projektionsfläche projiziert wird, wobei sich die projizierten Einzelbilder zu einem projizierten Gesamtbild kombinieren, und wobei sich die projizierten Einzelbilder inhaltlich gleichen, **dadurch gekennzeichnet, dass**
das Projektionssystem ferner eine Bildanalyseeinrichtung (1592) aufweist, die konfiguriert ist, um eine überwiegende Kantenrichtung (1280) des projizierten Gesamtbildes aus Bilddaten der Einzelbilder oder aus Bilddaten des zu projizierenden Gesamtbilds zu bestimmen,
und dass das Projektionssystem ferner eine Gesamtapertursteuerung (1594) aufweist, die konfiguriert ist, um eine Teilmenge aus der Mehrzahl von Bildgebern (1233-1 bis 1233-16) sowie eine Teilmenge von entsprechenden zugeordneten optischen Kanälen innerhalb der Mehrkanaloptik (40) anhand der überwiegenden Kantenrichtung (1280) des projizierten Gesamtbilds so auszuwählen, dass
die Mehrkanaloptik (40) eine zumindest temporäre anisotrope Gesamtapertur (1272) mit einer Hauptapertur-rachse (1274) und einer dazu orthogonalen Nebenaperturachse (1276) aufweist,
wobei die Auswahl der jeweiligen Bildgeber (1233-1 bis 1233-16) sowie der entsprechenden optischen Kanäle (44-1 bis 44-7) derart erfolgt, dass die Hauptaperturachse (1274) einen kleineren Winkel mit der überwiegenden Kantenrichtung (1280) des Gesamtbilds einschließt, als die Nebenaperturachse (1276).

**19.** Projektionssystem gemäß Anspruch 18, wobei die überwiegende Kantenrichtung (1280) einer Richtung entspricht, in der das projizierte Gesamtbild einen minimalen gemittelten Gradienten aufweist.

**20.** Projektionssystem gemäß Anspruch 18 oder 19, wobei die überwiegende Kantenrichtung (1280) orthogonal ist zu einer Hauptgradientenrichtung des projizierten Gesamtbilds.

**21.** Projektionssystem gemäß Anspruch 20, wobei die Hauptgradientenrichtung durch

$$g = \frac{\left( \begin{array}{c} \sum_i \sum_j \nabla_x p_{i,j} \\ \sum_i \sum_j \left| \nabla_y p_{i,j} \right| \end{array} \right)}{\left\| \left( \begin{array}{c} \sum_i \sum_j \nabla_x p_{i,j} \\ \sum_i \sum_j \nabla_y p_{i,j} \end{array} \right) \right\|}$$

definiert ist, mit

p Bildinhalt des projizierten Gesamtbilds
$p_{i,j}$ Pixelwert des projizierten Gesamtbilds an der Stelle $i,j$
$\nabla_x p_{i,j}$ x-Komponente des Gradienten von $p$ an der Stelle $i,j$
$\nabla_y p_{i,j}$ y-Komponente des Gradienten von $p$ an der Stelle $i,j$.

**22.** Projektionssystem gemäß Anspruch 20, wobei die Hauptgradientenrichtung durch einen maximalen Gradienten-Histogrammwert definiert ist.

**23.** Projektionssystem gemäß einem der Ansprüche 18 bis 22, wobei die Gesamtapertur-Steuerung (1594) einen Bildgeberwähler (1695) umfasst, der konfiguriert ist, um die Teilmenge aus der Mehrzahl der Bildgeber (1233-1 bis 1233-16) anhand der überwiegenden Kantenrichtung (1280) auszuwählen, wobei die Teilmenge der Bildgeber (1233-1 bis 1233-16) länglich ist und eine Längsachse der Teilmenge der Bildgeber (1233-1 bis 1233-16) einen Winkel mit der überwiegenden Kantenrichtung (1280) aufweist, der kleiner als 30 Grad ist.

**24.** Projektionssystem gemäß einem der Ansprüche 18 bis 23, weiter umfassend einen Teilbildjustierer (1696), der konfiguriert ist, um die Einzelbilder zu justieren hinsichtlich zumindest eines von Intensität, Position bezogen auf den entsprechenden Bildgeber (1233-1 bis 1233-16) und Lage bezogen auf den entsprechenden Bildgeber (1233-1 bis 1233-16).

**25.** Verfahren zum Projizieren eines Gesamtbildes, das Verfahren umfassend:

Erzeugen von Einzelbildern mittels einer Mehrzahl von Bildgebern (1233-1 bis 1233-16), und
Abbilden, durch jeweils einen optischen Kanal einer Mehrkanaloptik (40), jeweils eines Einzelbildes eines zugeordneten Bildgebers in eine Projektionsfläche, sodass sich die Abbildungen der Einzelbilder in der Projektionsfläche zu dem Gesamtbild zusammenfügen, und wobei sich die Einzelbilder inhaltlich gleichen,
**dadurch gekennzeichnet, dass** das Verfahren ferner die folgenden Schritte umfasst:

Bestimmen einer überwiegenden Kantenrichtung (1280) des projizierten Gesamtbildes aus Bilddaten der Einzelbilder oder aus Bilddaten des Gesamtbilds; und
Auswählen einer Teilmenge der Mehrzahl von Bildgebern (1233-1 bis 1233-16) und einer Teilmenge von entsprechenden zugeordneten optischen Kanälen innerhalb einer Mehrkanaloptik (40) basierend auf der überwiegenden Kantenrichtung (1280) des projizierten Gesamtbilds,
sodass die Mehrkanaloptik (40) eine zumindest temporäre anisotrope Gesamtapertur (1272) mit einer Hauptaperturachse (1274) und einer dazu orthogonalen Nebenaperturachse (1276) aufweist und wobei die Auswahl der Bildgeber (1233-1 bis 1233-16) und der entsprechenden optischen Kanäle derart erfolgt, dass die Hauptaperturachse (1274) einen kleineren Winkel mit der überwiegenden Kantenrichtung (1280) des Gesamtbilds einschließt, als die Nebenaperturachse (1276).

**26.** Computerprogramm mit einem Programmcode zur Durchführung des Verfahrens nach Anspruch 25 unter Verwendung eines Projektionssystems nach einem der Ansprüche 18 bis 24, wenn das Computerprogramm auf einem Computer abläuft.

**Claims**

**1.** Projection display comprising

an imager (30) implemented to generate individual images in a distribution of sub-areas (33-1 to 33-7) of an imaging plane of the imager (30), the individual images in the sub-areas being identical in content,
multi-channel optics (40) including several optical channels (44-1 to 44-7) and being configured to map, per channel (44-1 to 44-7), one allocated sub-area (33-1 to 33-7) of the imager (30) in each case into a projection area, so that the mappings of the individual images combine to form an overall image (5) in the projection area,
**characterized in that**
the sub-areas (33-1 to 33-7) of the imager (30) as well as the optical channels (44-1 to 44-7) of the multi-channel optics (40) are each arranged in an elongated array, so that the multi-channel optics (40) comprises a anisotropic artificial overall aperture,
wherein the elongated array of the sub-areas (33-1 to 33-7) is oriented in a manner similar to that of at least one elongated image feature of the overall image,
so that the artificial overall aperture of the multi-channel optics (40) is larger in one direction along the at least one elongated image feature than in a direction orthogonally thereto.

**2.** Projection display according to claim 1, wherein the channels (44-1 to 44-7) of the multi-channel optics (40) form a two-dimensional array which has more channels along the elongated image feature than in a direction orthogonally thereto.

**3.** Projection display according to claim 2, wherein the two-dimensional array of said channels (44-1 to 44-7) of the multi-channel optics (40) forms a contiguous area.

4. Projection display according to any of claims 1 to 3, wherein the elongated array of the channels (44-1 to 44-7) of the multi-channel optics (40) incorporates an angle between 80 degrees and 100 degrees with a predominant intensity gradient direction of the overall image (5).

5. Projection display according to any of claims 1 to 4, wherein the imager (30) is a static imager and the overall image (5) is predetermined.

6. Projection display according to any of claims 1 to 4, wherein the imager (30) is a dynamic imager, and a preferred direction of the at least one image feature of the overall image (5) has been previously known or determined within a tolerance range.

7. Projection display according to any of claims 1 to 6, wherein the multi-channel optics (40) is configured to partly or completely superimpose the mappings of the individual images.

8. Projection display according to any of claims 1 to 7, wherein the channels (44-1 to 44-7) of the multi-channel optics (40) form a two-dimensional array comprising one or several areas with respective envelopes of the channels (44-1 to 44-7), wherein the area or the contiguous areas are similar to the at least one elongated image feature with respect to orientation.

9. Projection display according to any of claims 1 to 8, wherein the channels (44-1 to 44-7) of the multi-channel optics (40) comprise a small sub-aperture and a large depth of focus as compared to the overall multi-channel optics (40), so that the mappings of the individual images considered individually are focused across a comparatively large range of a distance between the multi-channel optics (40) and the projection area.

10. Projection display according to any of claims 1 to 9, wherein at least some of the channels (44-1 to 44-7) of the multi-channel optics (40) are arranged in a symbol-like sub-aperture array in order to obtain, for varying projection distances, a symbolic out-of-focus behavior which corresponds to the symbol-like sub-aperture array.

11. Projection display according to any of claims 1 to 10, wherein the multi-channel optics (40) comprises a one-dimensional channel array, a concentric channel array, a square channel array, a hexagonal channel array, or a stochastic channel array.

12. Projection display according to any of claims 1 to 11, wherein the multi-channel optics includes further channels arranged in a second elongated array whose orientation differs from that of the first elongated array, and wherein the projection display further includes a control activating, in dependence on a predominant image feature direction in the overall image, the first elongated array or the second elongated array or both the first and second elongated arrays for the projection of the overall pattern in that sub-areas of the imager (30) allocated to the respective activated channels are activated.

13. Projection display according to claim 12, further including a plurality of individually controllable light sources, wherein each light source is allocated to a channel of the multi-channel optics and the allocated sub-area of the imager (30), and wherein activating the sub-areas of the imager (30) includes, or is effected by, activating the allocated light sources.

14. Method of projecting an overall image (5), the method comprising:

generating individual images in a distribution of sub-areas (33-1 to 33-7) of an imaging plane of an imager (30), the individual images in the sub-areas being identical in content,
mapping, by one of several optical channels (44-1 to 44-7) of multi-channel optics (40) in each case, an allocated sub-area (33-1 to 33-7) of the imaging plane, respectively, such that the mappings of the individual images in the projection area are combined to form an overall image (5),
**characterized in that**
the sub-areas (33-1 to 33-7) of the imager (30) as well as the optical channels (44-1 to 44-7) of the multi-channel optics (40) are each arranged in an elongated array, so that the multi-channel optics (40) comprises a anisotropic artificial overall aperture,
wherein the elongated array of the sub-areas is oriented in a manner similar to that of at least one elongated image feature of the overall image,
so that the artificial overall aperture of the multi-channel optics (40) is larger in one direction along the at least one elongated image feature than in a direction orthogonally thereto.

**15.** Method according to claim 14, wherein generating of the individual images is performed in dependence on a smallest distance and a largest distance between the multi-channel optics (40) and the projection area.

**16.** Method according to claims 14 or 15, wherein mapping of the respectively allocated sub-areas (33-1 to 33-7) includes:

receiving the overall image (5) for projection by means of a dynamic imager (30);
determining sub-image data of the overall image (5), said data being allocated to the sub-areas (33-1 to 33-7) of the imaging plane;
detecting and localizing the at least one elongated image feature of the overall image (5);
identifying a subset of the channels of the multi-channel optics (40) that form an elongated array whose orientation essentially corresponds to the orientation of the at least one elongated image feature;
loading the sub-image data into the dynamic imager (30);
activating the sub-areas of the imager that are allocated to the channels of the subset.

**17.** Computer program having a program code for performing the method according to any of claims 14 to 16 while using a projection display according to any of claims 1 to 13, when the computer program runs on a computer.

**18.** Projection system comprising

multi-channel optics (40) including several optical channels (44-1 to 44-7), and
a plurality of imagers (1233-1 to 1233-16), each being allocated to one of the optical channels (44-1 to 44-7) and being configured to display one individual image, respectively, which is projected into a projection area by means of the allocated optical channel (44-1 to 44-7), wherein the projected individual images combine to form a projected overall image, and wherein the projected individual images are identical in content,
**characterized in that**
the projection system further comprises image analysis means (1592) configured to determine a predominant edge direction (1280) of the projected overall image from image data of the individual images or from image data of the overall image to be projected,
and that the projection system further comprises an overall aperture control (1594) configured to select, on the basis of the predominant edge direction (1280) of the projected overall image, a subset from the plurality of imagers (1233-1 to 1233-16) as well as a subset of corresponding allocated optical channels within the multi-channel optics (40) such that
the multi-channel optics (40) comprises an at least temporary anisotropic overall aperture (1272) with a main aperture axis (1274) and a secondary aperture axis (1276) orthogonal thereto,
wherein the selection of the respective imagers (1233-1 to 1233-16) and of the corresponding optical channels (44-1 to 44-7) is performed such that the main aperture axis (1274) incorporates a smaller angle with the predominant edge direction (1280) of the overall image than does the secondary aperture axis (1276).

**19.** Projection system according to claim 18, wherein the predominant edge direction (1280) corresponds to a direction in which the projected overall image comprises a minimum averaged gradient.

**20.** Projection system according to claims 18 or 19, wherein the predominant edge direction (1280) is orthogonal to a main gradient direction of the projected overall image.

**21.** Projection system according to claim 20, wherein the main gradient direction is defined by

$$g = \frac{\begin{pmatrix} \sum_i \sum_j \nabla_x p_{i,j} \\ \sum_i \sum_j |\nabla_y p_{i,j}| \end{pmatrix}}{\left\| \begin{pmatrix} \sum_i \sum_j \nabla_x p_{i,j} \\ \sum_i \sum_j \nabla_y p_{i,j} \end{pmatrix} \right\|}$$

wherein

p image content of the projected overall image,
$p_{i,j}$ pixel value of the projected overall image at the position $i,j$,
$\nabla_x p_{i,j}$ x component of the gradient of p at the position $i,j$,
$\nabla_y p_{i,j}$ y component of the gradient of p at the position $i,j$.

22. Projection system according to claim 20, wherein the main gradient direction is defined by a maximum gradient histogram value.

23. Projection system according to any of claims 18 to 22, wherein the overall aperture control (1594) includes an imager selector (1695) configured to select the subset from the plurality of imagers (1233-1 to 1233-16) on the basis of the predominant edge direction (1280), wherein the subset of imagers (1233-1 to 1233-16) is elongated and a longitudinal axis of the subset of imagers (1233-1 to 1233-16) comprises an angle with the predominant edge direction (1280) that is less than 30 degrees.

24. Projection system according to any of claims 18 to 23, further comprising a sub-image adjuster (1696) configured to adjust the individual images with respect to at least one of intensity, position with respect to the corresponding imager (1233-1 to 1233-16), and location with respect to the corresponding imager (1233-1 to 1233-16).

25. Method of projecting an overall image, the method comprising:

generating individual images by means of a plurality of imagers (1233-1 to 1233-16), and
mapping an individual image of an allocated imager into a projection area by an optical channel of multi-channel optics (40) in each case, so that the mappings of the individual images in the projection area combine to form the overall image, and
wherein the individual images are identical in content,
**characterized in that** the method further comprises:

determining a predominant edge direction (1280) of the projected overall image from image data of the individual images or from image data of the overall image;
selecting, on the basis of the predominant edge direction (1280) of the projected overall image, a subset of the plurality of imagers (1233-1 to 1233-16) as well as a subset of corresponding allocated optical channels within multi-channel optics (40),
such that the multi-channel optics (40) comprises an at least temporary anisotropic overall aperture (1272) with a main aperture axis (1274) and a secondary aperture xis (1276) orthogonal thereto, and wherein the selection of the respective imagers (1233-1 to 1233-16) and of the corresponding optical channels is performed such that the main aperture axis (1274) incorporates a smaller angle with the predominant edge direction (1280) of the overall image than does the secondary aperture axis (1276).

26. Computer program having a program code for performing the method according to claim 25 while using a projection system according to any of claims 18 to 24, when the computer program runs on a computer.

**Revendications**

1. Ecran de projection avec

un générateur d'images (30) qui est conçu pour générer, dans une distribution de zones partielles (33-1 à 33-7) d'un plan d'imagerie du générateur d'images (30), des images individuelles, où les images individuelles dans les zones partielles sont identiques en contenu, et
une optique multicanal (40) qui comporte plusieurs canaux optiques (44-1 à 44-7) et qui est configurée pour reproduire, par canal (44-1 à 44-7), chaque fois une zone partielle associée (33-1 à 33-7) du générateur d'images (30) dans une surface de projection de sorte que les reproductions des images individuelles dans la surface de projection se combinent pour former une image totale (5),

**caractérisé par le fait que**

les zones partielles (33-1 à 33-7) du générateur d'images (30) ainsi que les canaux optiques (44-1 à 44-7) de l'optique multicanal (40) sont disposés, chacun, selon un aménagement allongé, de sorte que l'optique multicanal (40) présente une ouverture totale artificielle anisotrope,
dans lequel l'aménagement allongé des zones partielles (33-1 à 33-7) est orienté de manière similaire à au moins une caractéristique d'image allongée de l'image totale,
de sorte que l'ouverture totale artificielle de l'optique multicanal (40) soit plus grande dans une direction le long de l'au moins une caractéristique d'image allongée que dans une direction orthogonale à cette dernière.

2. Ecran de projection selon la revendication 1, dans lequel les canaux (44-1 à 44-7) de l'optique multicanal (40) forment un aménagement bidimensionnel qui présente plus de canaux le long de la caractéristique d'image allongée que dans une direction orthogonale à cette dernière.

3. Ecran de projection selon la revendication 2, dans lequel l'aménagement bidimensionnel desdits canaux (44-1 à 44-7) de l'optique multicanal (40) forme une zone continue.

4. Ecran de projection selon l'une des revendications 1 à 3, dans lequel l'aménagement allongé des canaux (44-1 à 44-7) de l'optique multicanal (40) forme un angle compris entre 80 degrés et 100 degrés avec une direction de gradient d'intensité prédominante de l'image totale (5).

5. Ecran de projection selon l'une des revendications 1 à 4, dans lequel le générateur d'images (30) est un générateur d'images statiques et l'image totale (5) est prédéterminée.

6. Ecran de projection selon l'une des revendications 1 à 4, dans lequel le générateur d'images (30) est un générateur d'images dynamique et une direction préférentielle de l'au moins une caractéristique d'image de l'image totale (5) est connue d'avance ou a été déterminée dans les limites d'une plage de tolérance.

7. Ecran de projection selon l'une des revendications 1 à 6, dans lequel l'optique multicanal (40) est configuré pour superposer partiellement ou complètement les reproductions des images individuelles.

8. Ecran de projection selon l'une des revendications 1 à 7, dans lequel les canaux (44-1 à 44-7) de l'optique multicanal (40) forment un aménagement bidimensionnel qui présente une ou plusieurs zones avec des enveloppes correspondantes des canaux (44-1 à 44-7), dans lequel la zone ou les zones continues sont similaires à l'au moins une caractéristique d'image allongée en ce qui concerne l'orientation.

9. Ecran de projection selon l'une des revendications 1 à 8, dans lequel les canaux (44-1 à 44-7) de l'optique multicanal (40) présentent, en comparaison avec l'optique multicanal (40) totale, une petite sous-ouverture et une grande profondeur de champ, de sorte que la reproduction des images individuelles, vues individuellement, soit nette sur une zone comparativement grande d'une distance entre l'optique multicanal (40) et la surface de projection.

10. Ecran de projection selon l'une des revendications 1 à 9, dans lequel au moins certains des canaux (44-1 à 44-7) de l'optique multicanal (40) sont disposés selon un aménagement de sous-ouverture de type symbole pour obtenir, pour des distances de projection variables, un comportement de flou symbolique qui correspond à l'aménagement de sous-ouverture de type symbole.

11. Ecran de projection selon l'une des revendications 1 à 10, dans lequel l'optique multicanal (40) présente un aménagement de canaux unidimensionnel, un aménagement de canaux concentrique, un aménagement de canaux carré, un aménagement de canaux hexagonal ou un aménagement de canaux stochastique.

**12.** Ecran de projection selon l'une des revendications 1 à 11, dans lequel l'optique multicanal comporte d'autres canaux qui sont disposés selon un deuxième aménagement allongé qui présente une orientation différente de celle du premier aménagement allongé, et dans lequel l'écran de projection comporte par ailleurs une commande qui, en fonction d'une direction de caractéristique d'image prédominante dans l'image totale, active le premier aménagement allongé ou le deuxième aménagement allongé ou tant le premier aménagement allongé que le deuxième aménagement allongé pour la projection du modèle global en activant les zones partielles du générateur d'images (30) associées aux canaux activés respectifs.

**13.** Ecran de projection selon la revendication 12, comportant par ailleurs une pluralité de sources de lumière pouvant être commandées individuellement, dans lequel chaque source de lumière est associée à un canal de l'optique multicanal et à la zone partielle associée du générateur d'images (30), et dans lequel l'activation des zones partielles du générateur d'images (30) comporte une activation des sources de lumière incluses associées ou a lieu par suite de cette dernière.

**14.** Procédé de projection d'une image totale (5), dans lequel le procédé comporte les étapes suivantes consistant à:

générer des images individuelles dans une distribution de zones partielles (33-1 à 33-7) d'un plan d'imagerie d'un générateur d'images (30), où les images individuelles dans les zones partielles sont identiques en contenu, et

reproduire, par chaque fois un de plusieurs canaux optiques (44-1 à 44-7) d'une optique multicanal (40), chaque fois une zone partielle (33-1 à 33-7) associée du plan d'imagerie dans une surface de projection, de sorte que les reproductions des images individuelles dans la surface de projection se combinent pour former une image totale (5),

**caractérisé par le fait que**

les zones partielles (33-1 à 33-7) du générateur d'images (30) ainsi que les canaux optiques (44-1 à 44-7) de l'optique multicanal (40) sont disposés, chacun, selon un aménagement allongé, de sorte que l'optique multicanal (40) présente une ouverture totale artificielle anisotrope,

dans lequel l'aménagement allongé des zones partielles est orienté de manière similaire à au moins une caractéristique d'image allongée de l'image totale (5), de sorte que l'ouverture totale artificielle de l'optique multicanal (40) soit plus grande dans une direction le long de l'au moins une caractéristique d'image allongée que dans une direction orthogonale à cette dernière.

**15.** Procédé selon la revendication 14, dans lequel la génération des images individuelles s'effectue en fonction d'une distance la plus petite et d'une distance la plus grande entre l'optique multicanal (40) et la surface de projection.

**16.** Procédé selon la revendication 14 ou 15, dans lequel la reproduction des zones partielles (33-1 à 33-7) associées respectives comprend le fait de:

recevoir l'image totale (5) pour projection au moyen d'un générateur d'images dynamique (30);
déterminer les données d'images partielles de l'image totale (5) qui sont associées aux zones partielles (33-1 à 33-7) du plan d'imagerie;
reconnaître et localiser l'au moins une caractéristique d'image allongée de l'image totale (5);
déterminer une quantité partielle des canaux de l'optique multicanal (40) qui forment un aménagement allongé dont l'orientation correspond sensiblement à l'orientation de l'au moins une caractéristique d'image allongée;
charger les données d'images partielles dans le générateur d'images dynamique (30);
activer les zones partielles du générateur d'images qui sont associées aux canaux de la quantité partielle.

**17.** Programme d'ordinateur avec un code de programme pour la mise en oeuvre du procédé selon l'une des revendications 14 à 16 à l'aide d'un écran de projection selon l'une des revendications 1 à 13 lorsque le programme d'ordinateur est exécuté sur un ordinateur.

**18.** Système de projection avec

un système optique multicanal (40) qui comporte plusieurs canaux optiques (44-1 à 44-7), et
une pluralité de générateurs d'images (1233-1 à 1233-16) qui sont associés, chacun, à un des canaux optiques (44-1 à 44-7) et qui sont configurés pour représenter, chacun, une image individuelle qui est projetée au moyen du canal optique (44-1 à 44-7) associé dans une surface de projection, où les images individuelles projetées se combinent pour former une image totale projetée, et où les images individuelles projetées sont identiques en contenu,

**caractérisé par le fait que**

le système de projection comporte par ailleurs un moyen d'analyse d'image (1592) qui est configuré pour déterminer une direction de bord prédominante (1280) de l'image totale projetée à partir des données d'image des images individuelles ou à partir des données d'image de l'image totale à projeter,

et que le système de projection comporte par ailleurs un moyen de commande d'ouverture totale (1594) qui est configuré pour sélectionner une quantité partielle parmi la pluralité de générateurs d'images (1233-1 à 1233-16) ainsi qu'une quantité partielle de canaux optiques associés correspondants dans l'optique multicanal (40) sur base de la direction de bord prédominante (1280) de l'image totale projetée de sorte que l'optique multicanal (40) présente une ouverture totale anisotrope (1272) au moins temporaire avec un axe d'ouverture principal (1274) et un axe d'ouverture secondaire (1276) orthogonal à ce dernier,

dans lequel la sélection des générateurs d'images (1233-1 à 1233-16) respectifs ainsi que des canaux optiques (44-1 à 44-7) correspondants a lieu de sorte que l'axe d'ouverture principal (1274) forme un angle plus petit avec la direction de bord prédominante (1280) de l'image totale que l'axe d'ouverture secondaire (1276).

19. Système de projection selon la revendication 18, dans lequel la direction de bord prédominante (1280) correspond à une direction dans laquelle l'image totale projetée présente un gradient moyen minimum.

20. Système de projection selon la revendication 18 ou 19, dans lequel la direction de bord prédominante (1280) est orthogonale à une direction de gradient principale de l'image totale projetée.

21. Système de projection selon la revendication 20, dans lequel la direction de gradient principale est définie par

$$g = \frac{\begin{pmatrix} \sum_i \sum_j \nabla_x p_{i,j} \\ \sum_i \sum_j |\nabla_y p_{i,j}| \end{pmatrix}}{\left\| \begin{matrix} \sum_i \sum_j \nabla_x p_{i,j} \\ \sum_i \sum_j \nabla_y p_{i,j} \end{matrix} \right\|}$$

où

$p$ contenu de l'image totale projetée

$p_{i,j}$ valeur en pixels de l'image totale projetée à l'endroit $i, j$

$\nabla_x p_{i,j}$ composante x du gradient de $p$ à l'endroit $i, j$

$\nabla_y p_{i,j}$ composante y du gradient de $p$ à l'endroit $i, j$.

22. Système de projection selon la revendication 20, dans lequel la direction de gradient principale est définie par une valeur d'histogramme de gradient maximum.

23. Système de projection selon l'une des revendications 18 à 22, dans lequel le moyen de commande d'ouverture totale (1594) comporte un sélecteur de générateur d'images (1695) qui est configuré pour sélectionner la quantité partielle de la pluralité de générateurs d'images (1233-1 à 1233-16) sur base de la direction de bord prédominante (1280), dans lequel la quantité partielle des générateurs d'images (1233-1 à 1233-16) est allongée et un axe longitudinal de la quantité partielle des générateurs d'images (1233-1 à 1233-16) présente un angle avec la direction de bord prédominante (1280) qui est inférieur à 30 degrés.

24. Système de projection selon l'une des revendications 18 à 23, comportant par ailleurs un ajusteur d'images partielles (1696) qui est configuré pour ajuster les images individuelles en ce qui concerne au moins l'un parmi l'intensité, la position par rapport au générateur d'images (1233-1 à 1233-16) correspondant et la position par rapport au générateur d'images (1233-1 à 1233-16) correspondant.

28

**25.** Procédé de projection d'une image d'ensemble, le procédé comportant le fait de:

générer des images individuelles au moyen d'une pluralité de générateurs d'images (1233-1 à 1233-16), et reproduire, par chaque fois un canal optique d'un système optique multicanal (40), chaque fois une image individuelle d'un générateur d'images associé dans une surface de projection, de sorte que les reproductions des images individuelles dans la surface de projection se combinent pour former l'image totale, et où les images individuelles sont identiques en contenu,
**caractérisé par le fait que** le procédé comporte par ailleurs les étapes suivantes consistant à:

déterminer une direction de bord prédominante (1280) de l'image totale projetée à partir des données d'image des images individuelles ou à partir des données d'image de l'image totale; et
sélectionner une quantité partielle de la pluralité de générateurs d'images (1233-1 à 1233-16) et une quantité partielle de canaux optiques associés correspondants dans une optique multicanal (40) sur base de la direction de bord prédominante (1280) de l'image totale projetée,
de sorte que l'optique multicanal (40) présente une ouverture totale anisotrope (1272) au moins temporaire avec un axe d'ouverture principal (1274) et un axe d'ouverture secondaire (1276) orthogonal à ce dernier, et où la sélection des générateurs d'images (1233-1 à 1233-16) et des canaux optiques correspondants a lieu de sorte que l'axe d'ouverture principal (1274) forme un angle plus petit avec la direction de bord prédominante (1280) de l'image totale que l'axe d'ouverture secondaire (1276).

**26.** Programme d'ordinateur avec un code de programme pour la mise en œuvre du procédé selon la revendication 25 à l'aide d'un système de projection selon l'une des revendications 18 à 24 lorsque le programme d'ordinateur est exécuté sur un ordinateur.

FIG 1

FIG 2A

FIG 2B

FIG 2C

EP 2 847 999 B1

FIG 3A

FIG 3B

FIG 3C

EP 2 847 999 B1

FIG 4

FIG 5A

FIG 5B

FIG 6A

FIG 6B

FIG 6C

702

Erzeugen von Einzelbildern in einer Verteilung von Teilbereichen einer Bildgebungsebene

704

Abbilden, durch jeweils einen Kanal einer Mehrkanaloptik, jeweils eines zugeordneten Teilbereichs der Bildgebungsebene, und zwar so, dass sich die Abbildung der Einzelbilder in einer Projektionsfläche zu einem Gesamtbild zusammenfügen, wobei die Mehrkanaloptik Kanäle umfasst, die in einer länglichen Anordnung angeordnet sind, die im Wesentlichen wie zumindest ein längliches Bildmerkmal des Gesamtbilds ausgerichtet ist, so dass die Mehrkanaloptik in einer Richtung entlang des zumindest einen Bildmerkmals eine größere Gesamtaperatur aufweist, als orthogonal dazu

FIG 7

FIG 8

FIG 9

FIG 10

100

112(110)
115
121(120)
125
124
124
$p_{OBJ}$
104
122

142(140)
132
134
135
$p_{PL}$
101
102
103
150
L
162 (160)

EP 2 847 999 B1

40

FIG 11

FIG 12

FIG 13

FIG 14

Bilddaten
für zu projezierendes
Gesamtbild oder Teilbilder

1592 — Bildanalyse

1594 — Gesamtapertursteuerung

40

1230

FIG 15

Bilddaten
für zu projezierendes
Gesamtbild oder Teilbilder

1696

1592 — Bildanalyse

Teilbildjustierer

Gesamtaperturensteuerung

1695 — Bildgeber-Wähler

1594

40

1230

FIG 16

EP 2 847 999 B1

Bild

$P_{i,j}$ $P_{i,j+1}$

$P_{i+1,j}$

Gradientenberechnung ———1704

Gradient

$\begin{pmatrix} \nabla_x P_{i,j} \\ \nabla_y P_{i,j} \end{pmatrix}$

$\begin{pmatrix} \nabla_x P_{i+1,j} \\ \nabla_y P_{i+1,j} \end{pmatrix}$

Bestimmung der (durchschnittl.) Hauptgradientenrichtung ———1706

$$\text{Hauptgradientenrichtung} = \frac{\begin{pmatrix} \sum_i \sum_j \nabla_x P_{i,j} \\ \sum_i \sum_j |\nabla_y P_{i,j}| \end{pmatrix}}{\left\| \begin{pmatrix} \sum_i \sum_j \nabla_x P_{i,j} \\ \sum_i \sum_j \nabla_y P_{i,j} \end{pmatrix} \right\|}$$

1780

## FIG 17

Gradientenberechnung

$|\nabla P_{i,j}|$

$\varphi(\nabla P_{i,j})$

Gradienten-Histogramm

0°  180°

k = 0  k = k

$\varphi_0$  $\varphi_1$  $\varphi_2$  · · ·  $\varphi_k$

1810

$$\text{Histogram}_k = \sum_{\varphi(\nabla P_{i,j}) \in [\varphi_k ; \varphi_{k+1}]} |\nabla P_{i,j}|$$

$$\text{Hauptgradientenrichtung} = \max_k (\text{Histogram}_k)$$

FIG 18

FIG 19

**IN DER BESCHREIBUNG AUFGEFÜHRTE DOKUMENTE**

**In der Beschreibung aufgeführte Patentdokumente**

- DE 102009024894
- WO 9722032 A1
- DE 102009024894 A1

**In der Beschreibung aufgeführte Nicht-Patentliteratur**

- Coded aperture projection. *ACM Transactions on graphics,* 01. Juni 2010, vol. 29 (3), 1-12
- **VON W.J. SMITH.** Modern Optical Engineering. Mc-Graw-Hill, 2007
- **VON E. GEISSLER.** Meeting the Challenges of Developing LED-based Projection Display. *Proc. SPIE,* 2007, vol. 6196, 616901-616912
- **M. SIELER ; P. SCHREIBER ; P. DANNBERG ; A. BRÄUER ; A. TÜNNERMANN.** Ultraslim fixed pattern projectors with inherent homogenization of illumination. *Appl. Opt.,* 2012, vol. 51, 64-74